(19) Europäisches Patentamt
European Patent Office
Office européen des brevets

(11) EP 2 738 010 A1

(12) # EUROPEAN PATENT APPLICATION
published in accordance with Art. 153(4) EPC

(43) Date of publication:
**04.06.2014 Bulletin 2014/23**

(21) Application number: **12818331.6**

(22) Date of filing: **26.07.2012**

(51) Int Cl.:
***B41N 1/12*** *(2006.01)*

(86) International application number:
**PCT/JP2012/068956**

(87) International publication number:
**WO 2013/015354 (31.01.2013 Gazette 2013/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.07.2011 JP 2011165416**

(71) Applicant: **FUJIFILM Corporation**
**Tokyo 106-0031 (JP)**

(72) Inventor: **SUGASAKI Atsushi**
**Haibara-gun**
**Shizuoka 421-0396 (JP)**

(74) Representative: **HOFFMANN EITLE**
**Patent- und Rechtsanwälte**
**Arabellastrasse 4**
**81925 München (DE)**

(54) **RESIN COMPOSITION FOR LASER ENGRAVING, RELIEF PRINTING PLATE PRECURSOR FOR LASER ENGRAVING, PROCESS FOR PRODUCING RELIEF PRINTING PLATE PRECURSOR FOR LASER ENGRAVING, PROCESS FOR PRODUCING RELIEF PRINTING PLATE, AND RELIEF PRINTING PLATE**

(57) Disclosed are a resin composition for laser engraving, comprising (Component A) a resin that is a plastomer at 20°C and contains no ethylenically unsaturated group, and (Component B) a crosslinking agent, a relief printing plate precursor for laser engraving and a process for producing the same using the resin composition, and a relief printing plate and a process for making the same using the resin composition.

EP 2 738 010 A1

## Description

Technical Field

The present invention relates to a resin composition for laser engraving, a relief printing plate precursor for laser engraving, a process for producing a relief printing plate precursor for laser engraving, a process for making a relief printing plate, and a relief printing plate.

Background Art

A large number of so-called "direct engraving CTP methods", in which a relief-forming layer is directly engraved by means of a laser are proposed. In the method, a laser light is directly irradiated to a flexographic printing plate precursor to cause thermal decomposition and volatilization in relief-forming layer by photothermal conversion, thereby forming a concave part. Differing from a relief formation using an original image film, the direct engraving CTP method can control freely relief shapes. Consequently, when such image as an outline character is to be formed, it is also possible to engrave that region deeper than other regions, or, in the case of a fine halftone dot image, it is possible, taking into consideration resistance to printing pressure, to engrave while adding a shoulder. With regard to the laser for use in the method, a high-power carbon dioxide laser is generally used. In the case of the carbon dioxide laser, all organic compounds can absorb the irradiation energy and convert it into heat. On the other hand, inexpensive and small-sized semiconductor lasers have been developed, wherein, since they emit visible lights and near infrared lights, it is necessary to absorb the laser light and convert it into heat.

As a resin composition for laser engraving, those described in Patent Documents 1 to 3 are known.

Prior Art Document

Patent Document

Patent Document 1: JP-B-2846954 (JP-B denotes a Japanese examined patent application publication)
Patent Document 2: JP-A-2004-262136 (JP-A denotes a Japanese unexamined patent application publication)
Patent Document 3: JP-A-2011-510839

Summary of Invention

It is one object of the present invention to provide a relief printing plate precursor for laser engraving and a process for producing same in which engraving residue rinsing properties and ink transfer properties are excellent. Furthermore, it is another object of the present invention to provide a resin composition for laser engraving that is suitably used for such a printing plate precursor. It is yet another object of the present invention to provide a process for making a relief printing plate and a relief printing plate.

The objects of the present invention have been attained by <1>, <15>, <16>, <17>, <19>, and <20> below. They are listed together with <2> to <14>, <18>, <21>, and <22>, which are preferred embodiments.

<1> A resin composition for laser engraving, comprising (Component A) a resin that is a plastomer at 20°C and contains no ethylenically unsaturated group, and (Component B) a crosslinking agent,

<2> the resin composition for laser engraving according to <1>, wherein Component A is selected from the group consisting of a polycarbonate polyol, a polysiloxane polyol, an acrylic resin, a polyester resin having a hydroxy group at a molecular terminal, and a polyurethane resin having a hydroxy group at a molecular terminal, and Component B is selected from the group consisting of a (meth)acrylate compound, a polyfunctional isocyanate compound, and a silane coupling agent,

<3> the resin composition for laser engraving according to <1> or <2>, wherein it comprises a polycarbonate polyol as Component A and a (meth)acrylate compound as Component B,

<4> the resin composition for laser engraving according to <1> or <2>, wherein it comprises a polysiloxane polyol as Component A and a (meth)acrylate compound as Component B,

<5> the resin composition for laser engraving according to <1> or <2>, wherein it comprises an acrylic resin as Component A and a (meth)acrylate compound as Component B,

<6> the resin composition for laser engraving according to <1> or <2>, wherein it comprises a polyester resin having a hydroxy group at a molecular terminal as Component A and a (meth)acrylate compound as Component B,

<7> the resin composition for laser engraving according to <1> or <2>, wherein it comprises a polyurethane resin having a hydroxy group at a molecular terminal as Component A and a (meth)acrylate compound as Component B,
<8> the resin composition for laser engraving according to <1> or <2>, wherein it comprises an acrylic resin as Component A and a polyfunctional isocyanate compound as Component B,
<9> the resin composition for laser engraving according to <1> or <2>, wherein it comprises a polyester resin having a hydroxy group at a molecular terminal as Component A and a polyfunctional isocyanate compound as Component B,
<10> the resin composition for laser engraving according to <1> or <2>, wherein it comprises a polyurethane resin having a hydroxy group at a molecular terminal as Component A and a polyfunctional isocyanate compound as Component B,
<11> the resin composition for laser engraving according to <1> or <2>, wherein it comprises a polysiloxane polyol as Component A and a silane coupling agent as Component B,
<12> the resin composition for laser engraving according to <1> or <2>, wherein it comprises an acrylic resin as Component A and a silane coupling agent as Component B,
<13> the resin composition for laser engraving according to <1> or <2>, wherein it comprises a polyester resin having a hydroxy group at a molecular terminal as Component A and a silane coupling agent as Component B,
<14> the resin composition for laser engraving according to Claim 1 or 2, wherein it comprises a polyurethane resin having a hydroxy group at a molecular terminal as Component A and a silane coupling agent as Component B,
<15> a relief printing plate precursor for laser engraving, comprising a relief-forming layer comprising the resin composition for laser engraving according to any one of <1> to <14>,
<16> a relief printing plate precursor for laser engraving, comprising a crosslinked relief-forming layer formed by crosslinking by means of light and/or heat a relief-forming layer comprising the resin composition for laser engraving according to any one of <1> to <14>,
<17> a process for producing a relief printing plate precursor for laser engraving, comprising a layer formation step of forming a relief-forming layer comprising the resin composition for laser engraving according to any one of <1> to <14>, and a crosslinking step of crosslinking by means of light and/or heat the relief-forming layer to thus obtain a relief printing plate precursor having a crosslinked relief-forming layer,
<18> the process for producing a relief printing plate precursor for laser engraving according to <17>, wherein the crosslinking step is a step of crosslinking by means of heat the layer of the resin composition for laser engraving to thus obtain a relief printing plate precursor having a relief-forming layer,
<19> a process for making a relief printing plate, comprising a layer formation step of forming a relief-forming layer comprising the resin composition for laser engraving according to any one of <1> to <14>, a crosslinking step of crosslinking the relief-forming layer by means of light and/or heat to thus obtain a relief printing plate precursor having a crosslinked relief-forming layer, and an engraving step of laser-engraving the relief printing plate precursor having a crosslinked relief-forming layer to thus form a relief layer,
<20> a relief printing plate having a relief layer made by the process for making a relief printing plate according to <19>,
<21> the relief printing plate according to <20>, wherein the relief layer has a thickness of at least 0.05 mm but no greater than 10 mm, and
<22> the relief printing plate according to <20> or <21>, wherein the relief layer has a Shore A hardness of at least 50° but no greater than 90°.

In accordance with the process for producing a relief printing plate precursor of the present invention, there can be provided a relief printing plate precursor for laser engraving in which engraving residue rinsing properties and ink transfer properties after making a printing plate are excellent.

In accordance with the resin compsition for laser engraving of the present invention, there can also be provided a resin composition for laser engraving that is suitably used for such a printing plate precursor.

Moreover, in accordance with the process for making a relief printing plate of the present invention, there can be provided a relief printing plate having excellent engraving residue rinsing properties and ink transfer properties.

<u>Description of Embodiments</u>

The present invention is explained in detail below.

In the present invention, the notation 'lower limit to upper limit', which expresses a numerical range, means 'at least the lower limit but no greater than the upper limit', and the notation 'upper limit to lower limit' means 'no greater than the upper limit but at least the lower limit'. That is, they are numerical ranges that include the upper limit and the lower limit. Furthermore, '(Component A) a resin that is a plastomer at 20°C and contains no ethylenically unsaturated group' etc. are simply called 'Component A' etc.

(Resin composition for laser engraving)

The resin composition for laser engraving of the present invention (hereinafter, also simply called a 'resin composition') comprises (Component A) a resin that is a plastomer at 20°C and contains no ethylenically unsaturated group and (Component B) a crosslinking agent. The resin composition for laser engraving of the present invention can provide a relief printing plate precursor having excellent engraving residue rinsing properties and ink transfer properties after making a printing plate by comprising Component A and Component B.

The resin composition for laser engraving of the present invention may be applied to a wide range of uses where it is subjected to laser engraving, other than use as a relief-forming layer of a relief printing plate precursor, without particular limitations. For example, it may be applied not only to a relief-forming layer of a printing plate precursor where formation of a raised relief is carried out by laser engraving, which is explained in detail below, but also to the formation of various types of printing plates or various types of moldings in which image formation is carried out by laser engraving, such as another material form having asperities or openings formed on the surface such as for example an intaglio printing plate, a stencil printing plate, or a stamp.

Among them, the application thereof to the formation of a relief-forming layer provided on an appropriate support is a preferred embodiment.

In the present specification, with respect to explanation of the relief printing plate precursor, a non-crosslinked crosslinkable layer comprising Component A and Component B that is subjected to laser engraving is called a relief-forming layer, a layer that is formed by crosslinking the relief-forming layer is called a crosslinked relief-forming layer, and a layer that is formed by subjecting this to laser engraving so as to form asperities on the surface is called a relief layer.

Constituent components of the resin composition for laser engraving are explained below.

(Component A) Resin that is plastomer at 20°C and contains no ethylenically unsaturated group

The resin composition of the present invention comprises (Component A) a resin that is a plastomer at 20°C and contains no ethylenically unsaturated group (hereinafter, also simply called a plastomer).

The term 'plastomer' as used in the present invention means, as described in 'Shinpan Kobunshi Jiten (Newly-published Polymer Encyclopedia) ' edited by the Society of Polymer Science, Japan ( published in 1988 by Asakura Publishing Co., Ltd., Japan), a macromolecule which has a property of easily undergoing fluid deformation by heating and being capable of solidifying into a deformed shape by cooling. The term 'plastomer' is a term opposed to the term 'elastomer' (a polymer having a property of, when an external force is added, instantaneously deforming in accordance with the external force, and when the external force is removed, being restored to the original shape in a short time), and the plastomer does not exhibit the same elastic deformation as that exhibited by an elastomer, and easily undergoes plastic deformation.

In the present invention, a plastomer means a polymer which, when the original size is designated as 100%, can be deformed up to 200% of the original size by a small external force at room temperature (20°C), and even if the external force is removed, does not return to 130% or less of the original size. More particularly, the plastomer means a polymer with which, based on the tensile permanent strain test of JIS K 6262-1997, an I-shaped specimen can be extended to 2 times the gauge length before pulling in a tensile test at 20°C, and the tensile permanent strain measured after extending the specimen to 2 times the gauge length before pulling, subsequently maintaining the specimen for 5 minutes, removing the external tensile force, and maintaining the specimen for 5 minutes, is 30% or greater.

Meanwhile, in the case of a polymer that cannot be subjected to the measurement described above, a polymer which is deformed even if an external force is not applied and does not return to the original shape, corresponds to a plastomer, and for example, a syrup-like resin, an oil-like resin, and a liquid resin correspond thereto.

Furthermore, the plastomer according to the present invention is such that the glass transition temperature (Tg) of the polymer is lower than 20°C. In the case of a polymer having two or more Tg's, all the Tg's are lower than 20°C.

The viscosity of Component A at 20°C is preferably 10 Pa· s to 10 kPa·s, and more preferably 50 Pa·s to 5 kPa·s. When the viscosity is in this range, the resin composition can be easily molded into a sheet-like or cylindrical printing plate precursor, and the process is also simple and easy. In the present invention, since Component A is a plastomer, when the printing plate precursor for laser engraving obtainable from the resin composition is molded into a sheet form or a cylindrical form, a satisfactory thickness accuracy or a satisfactory dimensional accuracy can be achieved.

The number average molecular weight of Component A is preferably 1,000 to 200,000, more preferably 2,000 to 150,000, yet more preferably 3,000 to 100,000, and particularly preferably 5,000 to 100,000. A resin composition produced using Component A having a number average molecular weight in this range is easy to process; moreover, a precursor that is produced by subsequent crosslinking maintains its strength, and a relief image produced from this precursor is strong and can withstand repeated use. The number average molecular weight of Component A may be measured using a GPC (gel permeation chromatography) method and determined using a standard polystyrene calibration curve.

Component A dones not comprise an ethylenically unsaturated group. The flexibility of the relief layer is better when no ethylenically unsaturated group is contained.

Preferred examples of Component A include (Component A-1) a polycarbonate polyol, (Component A-2) a polysiloxane polyol, (Component A-3) an acrylic resin, (Component A-4) a polyester resin having a hydroxy group at a molecular terminal, and (Component A-5) a polyurethane resin having a hydroxy group at a molecular terminal.

Each component is described in detail below.

(Component A-1) Polycarbonate polyol

In the present invention, (Component A-1) a polycarbonate polyol can be used as Component A, and a polycarbonate diol is preferable.

Examples of the polycarbonate polyol include those obtained by a reaction between a polyol component and a carbonate compound such as a dialkyl carbonate, an alkylene carbonate, or a diaryl carbonate.

Examples of the polyol component forming the polycarbonate polyol include those usually used in the production of a polycarbonate polyol, for example, an aliphatic diol having 2 to 15 carbons such as ethylene glycol, diethylene glycol, triethylene glycol, propylene glycol, 1,3-propanediol, 2-methyl-1,3-propanediol, 2,2-diethyl-1,3-propanediol, 1,3-butanediol, 1,4-butanediol, 2-methyl-1,4-butanediol, neopentyl glycol, 1,5-pentanediol, 3-methyl-1,5-pentanediol, 1,6-hexanediol, 1,7-heptanediol, 1,8-octanediol, 2-methyl-1,8-octanediol, 2,7-dimethyl-1,8-octanediol, 1,9-nonanediol, 2-methyl-1,9-nonanediol, 2,8-dimethyl-1,9-nonanediol, or 1,10-decanediol; an alicyclic diol such as 1,4-cyclohexanediol, cyclohexanedimethanol, or cyclooctanedimethanol; an aromatic diol such as 1,4-bis(β-hydroxyethoxy)benzene; and a polyhydric alcohol having three or more hydroxy groups per molecule such as trimethylolpropane, trimethylolethane, glycerol, 1,2,6-hexanetriol, pentaerythritol, or diglycerol. When producing a polycarbonate polyol, with regard to these polyol components, one type thereof may be used or two or more types thereof may be used in combination.

Among them, when producing the polycarbonate polyol, it is preferable to use as the polyol component an aliphatic diol having 5 to 12 carbons and having a methyl group as a side chain, such as 2-methyl-1,4-butanediol, 3-methyl-1,5-pentanediol, 2-methyl-1,8-octanediol, 2,7-dimethyl-1,8-octanediol, 2-methyl-1,9-nonanediol, or 2,8-dimethyl-1,9-nonanediol. In particular, it is preferable to use such an aliphatic diol having 5 to 12 carbons and having a methyl group as a side chain at a proportion of at least 30 mole% of the total polyol components used in the production of the polycarbonate polyol, and more preferably at least 50 mole% of the total polyol components.

Examples of the dialkyl carbonate include dimethyl carbonate and diethyl carbonate, examples of the alkylene carbonate include ethylene carbonate, 1,2-propylene carbonate and 1,2-butylene carbonate, and examples of the diaryl carbonate include diphenyl carbonate.

As a polycarbonate polyol, a polyester polycarbonate polyol is also preferable, and examples of the polyester polycarbonate polyol include a polymer obtainable by allowing a polyol component, a polycarboxylic acid component and a carbonate compound to simultaneously react; a polymer obtainable by allowing a polyester polyol and a polycarbonate polyol that have been synthesized in advance to react with a carbonate compound; and a polymer obtainable by allowing a polyester polyol and a polycarbonate polyol that have been synthesized in advance to react with a polyol component and a polycarboxylic acid component.

The polycarbonate polyol is preferably a polycarbonate diol represented by Formula (1) below.

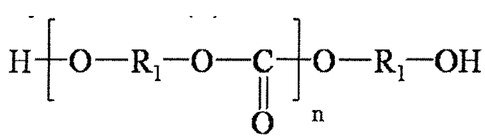

(1)

In Formula (1), the $R_1$s independently denote a straight-chain, branched, and/or cyclic hydrocarbon group having 3 to 50 carbons, which may contain an oxygen atom, etc. (at least one type of atom selected from the group consisting of nitrogen, sulfur, and oxygen) in a carbon skeleton, and $R_1$ may be a single component or comprise a plurality of components. n is preferably an integer of 1 to 500.

The 'hydrocarbon group' in $R_1$ is a saturated hydrocarbon group.

The 'carbon skeleton' in $R_1$ means a structural part having 3 to 50 carbons forming the hydrocarbon group, and the term 'which may contain an oxygen atom, etc. in a carbon skeleton' means a structure in which an oxygen atom, etc. is inserted into a carbon-carbon bond of a main chain or a side chain. Furthermore, it may be a substituent having an oxygen atom, etc., bonded to a carbon atom in a main chain or a side chain.

Examples of the straight-chain hydrocarbon group in $R_1$ include a hydrocarbon group derived from a straight-chain aliphatic diol having 3 to 50 carbons such as 1,3-propanediol, 1,4-butanediol, 1,5-pentanediol, 1,6-hexanediol, 1,7-heptanediol, 1,8-octanediol, 1,9-nonanediol, 1,10-decanediol, 1,12-dodecanediol, 1,16-hexadecanediol, or 1,20-eicosanediol.

Examples of the branched hydrocarbon group in $R_1$ include a hydrocarbon group derived from a branched aliphatic diol having 3 to 30 carbons such as 2-methyl-1,3-propanediol, 2-ethyl-1,3-propanediol, neopentyl glycol, 2,2-diethyl-1,3-propanediol, 2-methyl-2-propyl-1,3-propanediol, 2-butyl-2-ethyl-1,3-propanediol, 2,2-dibutyl-1,3-propanediol, 1,2-butanediol, 2-ethyl-1,4-butanediol, 2-isopropyl-1,4-butanediol, 2,3-dimethyl-1,4-butanediol, 2,3-diethyl-1,4-butanediol, 3,3-dimethyl-1,2-butanediol, pinacol, 1,2-pentanediol, 1,3-pentanediol, 2,3-pentanediol, 2-methyl-2,4-pentanediol, 3-methyl-1,5-pentanediol, 2-ethyl-1,5-pentanediol, 3-ethyl-1,5-pentanediol, 2-isopropyl-1,5-pentanediol, 3-isopropyl-1,5-pentanediol, 2,4-dimethyl-1,5-pentanediol, 2,4-diethyl-1,5-pentanediol, 2,3-dimethyl-1,5-pentanediol, 2,2,3-trimethyl-1,3-pentanediol, 1,2-hexanediol, 1,3-hexanediol, 1,4-hexanediol, 2,5-hexanediol, 2-ethyl-1,6-hexanediol, 2-ethyl-1,3-hexanediol, 2-isopropyl-1,6-hexanediol, 2,4-diethyl-1,6-hexanediol, 2,5-dimethyl-2,5-hexanediol, 2-methyl-1,8-octanediol, 2-ethyl-1,8-octanediol, 2,6-dimethyl-1,8-octanediol, 1,2-decanediol, or 8,13-dimethyl-1,20-eicosanediol.

Examples of the cyclic hydrocarbon group in $R_1$ include a hydrocarbon group derived from a cyclic aliphatic diol having 3 to 30 carbons such as 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, *m*-xylene-$\alpha,\alpha'$-diol, *p*-xylene-$\alpha,\alpha'$-diol, 2,2-bis(4-hydroxycyclohexyl)propane, 2,2-bis(4-hydroxyphenyl)propane, or dimer diol.

A hydrocarbon group derived from a straight-chain aliphatic diol having 3 to 50 carbons is explained as an example: in the present embodiment, the 'hydrocarbon group derived from a straight-chain aliphatic diol having 3 to 50 carbons' means a group which is a partial structure, excluding the diol hydroxy groups, of the straight-chain aliphatic diol having 3 to 50 carbons (a divalent group excluding two hydroxy groups from the straight-chain aliphatic diol having 3 to 50 carbons).

Examples of the hydrocarbon group containing at least one type of atom selected from the group consisting of nitrogen, sulfur, and oxygen in $R_1$ include a hydrocarbon group derived from diethylene glycol, triethylene glycol, tetraethylene glycol, glycerol, 1,2,6-hexanetriol, trimethylolethane, trimethylolpropane, pentaerythritol, dihydroxyacetone, 1,4:3,6-dianhydroglucitol, diethanolamine, *N*-methyldiethanolamine, dihydroxyethylacetamide, 2,2'-dithiodiethanol, or 2,5-dihydroxy-1,4-dithiane, and a group represented by Formula (2) below.

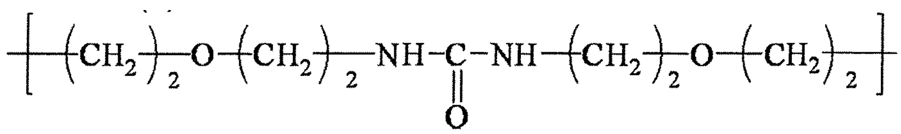

(2)

In Formula (2) above, from the viewpoint of solvent resistance, $R_1$ preferably contains at least one ether bond, and from the viewpoint of solvent resistance and durability, $R_1$ is more preferably derived from diethylene glycol (group represented by $-(CH_2)_2-O-(CH_2)_2-$).

A polycarbonate polyol may be produced by for example a conventionally known method as described in JP-B-5-29648, and specifically it may be produced by an ester exchange reaction between a polyol and a carbonic acid ester.

In the present embodiment, with regard to the polycarbonate polyol, one type may be used on its own or two or more types may be used in combination in accordance with the intended use, and it is preferable to use one type of the polycarbonate polyol.

The number average molecular weight of these polycarbonate polyol is preferable in the range of 1,000 to 200,000. The number average molecular weight of the polycarbonate polyol is more preferably in the range of 1,500 to 10,000, and yet more preferably in the range of 2,000 to 8,000. The number average molecular weight means a value measured by using gel permeation chromatography (GPC) and calibrated relative to standard polystyrenes having already known molecular weights.

The content of Component A-1 in the resin composition for laser engraving of the present invention is preferably 5 wt% to 90 wt%, more preferably 15 wt% to 85 wt%, and yet more preferably 30 wt% to 80 wt%, relative to the weight of the solids content excluding volatile components (a solvent).

(Component A-2) Polysiloxane polyol

In the present invention, (Component A-2) a polysiloxane polyol can be used as Component A. In regard to the polysiloxane polyol, if the polysiloxane polyol has two or more hydroxyl groups, the upper limit is not particularly limited, but the number of hydroxyl groups is preferably 2 to 6, more preferably 2 to 4, yet more preferably 2 to 3, and particularly preferably 2. If there are less than two hydroxyl groups in one molecule of Component A-2, Component A-2 cannot sufficiently react with Component B. When there are 6 or less hydroxy groups (active hydrogen atoms) in one molecule of Component A-2, the printing plate precursor thus obtainable has excellent rinsing properties, which is preferable.

Component A-2 needs to contain a siloxane bond in the molecule.

(Siloxane bond)

The siloxane bond will be described. The siloxane bond means a molecular structure in which silicon (Si) and oxygen (O) are alternately bonded.

The details of the mechanism by which the relief printing plate obtained by using the resin composition of the present invention acquires excellent ink transfer properties, are not clearly understood, but it is speculated that due to the siloxane bond that is stably bonded to Component A-2, the affinity to the ink is lower as compared with the siloxane bond that is added as an additive, and therefore, ink transfer properties are enhanced.

It is preferable that Component A-2 be obtainable from a silicone compound represented by the following average composition formula (3):

$$R_pQ_rX_sSiO_{(4-p-r-s)/2} \qquad (3)$$

In the formula (3), R represents one kind or two or more kinds of hydrocarbon groups selected from the group consisting of an alkyl group having 1 to 30 carbon atoms (carbon number before substitution) substituted with a linear or branched alkyl group having 1 to 30 carbon atoms, a cycloalkyl group having 5 to 20 carbon atoms, an alkoxy group having 1 to 20 carbon atoms or an aryl group having 6 to 20 carbon atoms, an aryl group having 6 to 20 carbon atoms substituted with a halogen atom, an alkoxycarbonyl group having 2 to 30 carbon atoms, a monovalent group containing a carboxyl group or a salt thereof, a monovalent group containing a sulfo group or a salt thereof, and a polyoxyalkylene group; Q and X independently represent a hydrogen atom, or one kind or two or more kinds of hydrocarbon groups selected from the group consisting of an alkyl group having 1 to 30 carbon atoms substituted with a linear or branched alkyl group having 1 to 30 carbon atoms, a cycloalkyl group having 5 to 20 carbon atoms, an alkoxy group having 1 to 20 carbon atoms or an aryl group having 6 to 20 carbon atoms, an aryl group having 6 to 20 carbon atoms substituted with a halogen atom, an alkoxycarbonyl group having 2 to 30 carbon atoms, a monovalent group containing a carboxyl group or a salt thereof, a monovalent group containing a sulfo group or a salt thereof, and a polyoxyalkylene group; and p, r and s are numbers that satisfy the relations: $0 < p < 4$, $0 \leq r < 4$, $0 \leq s < 4$, and $(p+r+s) < 4$.

According to the present exemplary embodiment, Component A-2 is obtained from a compound having a siloxane bond which is intended to introduce a siloxane bond.

The compound having a siloxane bond which is intended to introduce a siloxane bond may be, for example, a silicone oil. Examples of the silicone oil include low-viscosity to high-viscosity organopolysiloxanes such as dimethylpolysiloxane, methylphenylpolysiloxane, methyl hydrogen polysiloxane, dimethylsiloxane and methylphenylsiloxane copolymers; cyclic siloxanes such as octamethylcyclotetrasiloxane, decamethylcyclopentasiloxane, dodecamethylcyclohexasiloxane, tetramethyltetrahydrogencyclotetrasiloxane, and tetramethyltetraphenylcyclotetrasiloxane; silicone rubbers such as gum-like dimethylpolysiloxanes having high degrees of polymerization, gum-like dimethylsiloxanes, and methylphenylsiloxane copolymers, and cyclic siloxane solutions of silicone rubbers; cyclic siloxane solutions of trimethylsiloxysilicic acid and trimethylsiloxysilicic acid; higher alkoxy-modified silicones such as stearoxysilicones; and higher fatty acid-modified silicones.

In the present invention, Component A-2 can be obtained by modifying the compounds having siloxane bonds described above.

Examples include carbinol-modified silicone oils, phenol-modified silicone oils, silanol-modified silicone oils, and diol-modified silicone oils. Two or more of these silicone oils having hydroxyl groups can be used.

Among the silicone oils having two or more hydroxyl groups in the molecule, both terminal-modified silicone oils are preferred. Examples thereof include both terminal-carbinol-modified silicone oils, both terminal-phenol-modified silicone oils, and both terminal-silanol-modified silicone oils.

Furthermore, single terminal-modified silicone oils or side chain-modified silicone oils can also be used. Examples thereof include single terminal-diol-modified silicone oils, and side chain-carbinol-modified silicone oils.

Among them, from the viewpoint of reactivity, and handleability such as odor or irritability, both terminal-carbinol-modified silicone oils and single terminal-diol-modified silicone oils are preferred; both terminal-carbinol-modified silicone oils and single terminal-diol-modified silicone oils are more preferred; and both terminal-carbinol-modified silicone oils are yet more preferred.

Furthermore, the number average molecular weight of Component A-2 is preferably 1,000 to 30,000, more preferably 1,000 to 20,000, and yet more preferably 2,000 to 20,000. When the number average molecular weight is in this range, ink transfer properties due to siloxane bonds are sufficiently exhibited, and since there is a tendency that fluidity and compatibility of Component A-2 with Component B can be secured, handling is facilitated, which is preferred.

When the both tetminal-modified silicone oil is used as Component A-2, the number average molecular weight of Component A-2 is preferably 1,000 to 10,000, more preferably 1,000 to 5,000, and yet more preferably 2,000 to 3,000.

When the single terminal-modified silicone oil and/or the side chain-modified silicone oil are used as Component A-2, the number average molecular weight of Component A-2 is 1,000 to 30,000, and more preferably 10,000 to 20,000.
As Component A-2, commercially available products can also be employed, and examples include, as both terminal-carbinol-modified silicone oils, X-22-160AS, KF-6003 (all manufactured by Shin-Etsu Chemical Co., Ltd.), and BY 16-004 (manufactured by Dow Corning Toray Co., Ltd.); and as single terminal-diol-modified silicone oils, X-22-176DX and X-22-176F (all manufactured by Shin-Etsu Chemical Co., Ltd.).
The content of Component A-2 in the resin composition for laser engraving is preferably in the range of 5 wt% to 90 wt%, more preferably 15 wt% to 85 wt%, and yet more preferably 30 wt% to 80 wt%, relative to the solid content excluding volatile components (a solvent).

(Component A-3) Acrylic resin

In the present invention, (Component A-3) an acrylic resin can be used as Component A.
The acrylic resin is not particularly limited, as long as it is an acrylic resin obtained using a known (meth)acrylic monomer. The acrylic resin preferably has an active hydrogen in the molecule.
The active hydrogen referred to here means a hydrogen atom in -OH, - SH, -NH-, $-NH_2$, -COOH, etc., and means a hydrogen atom that has reactivity toward a reactive group of Component B. Among them, the active hydrogen is preferably a hydrogen atom in -OH, -NH-, or $-NH_2$, and more preferably a hydrogen atom in -OH (a hydroxy group).
Examples of the (meth)acrylic monomers used for synthesizing an acrylic resin having a hydroxy group include preferably (meth)acrylic acid esters, crotonic acid esters and (meth)acrylamides having a hydroxy group in the molecule. Specific examples of such monomers include 2-hydroxyethyl (meth)acrylate, 2-hydroxypropyl (meth)acrylate, 4-hydroxybutyl (meth)acrylate, etc.
Examples of the acrylic monomer other than the acrylic monomer having a hydroxy group include a (meth)acrylic ester such as methyl (meth)acrylate, ethyl (meth)acrylate, *n*-propyl (meth)acrylate, isopropyl (meth)acrylate, *n*-butyl (meth)acrylate, isobutyl (meth)acrylate, *tert*-butyl (meth)acrylate, *n*-hexyl (meth)acrylate, dodecyl (meth)acrylate, lauryl (meth)acrylate, 2-ethylhexyl (meth)acrylate, acetoxyethyl (meth)acrylate, phenyl (meth)acrylate, 2-methoxyethyl (meth)acrylate, 2-ethoxyethyl (meth)acrylate, 2-(2-methoxyethoxy)ethyl (meth)acrylate, cyclohexyl (meth)acrylate, t-butylcyclohexyl (meth)acrylate, benzyl (meth)acrylate, diethylene glycol monomethyl ether (meth)acrylate, diethylene glycol monoethyl ether (meth)acrylate, diethylene glycol monophenyl ether (meth)acrylate, triethylene glycol monomethyl ether (meth)acrylate, triethylene glycol monoethyl ether (meth)acrylate, dipropylene glycol monomethyl ether (meth)acrylate, polyethylene glycol monomethyl ether (meth)acrylate, polypropylene glycol monomethyl ether (meth)acrylate, the monomethyl ether (meth)acrylate of a copolymer of ethylene glycol and propylene glycol, *N,N*-dimethylaminoethyl (meth)acrylate, *N,N*-diethylaminoethyl (meth)acrylate, and *N,N*-dimethylaminopropyl (meth)acrylate.
Furthermore, a modified acrylic resin formed with a urethane bond- or urea bond-containing acrylic monomer may preferably be used.
Among them, from the viewpoint of ink transfer properties, an alkyl (meth)acrylate such as dodecyl (met) acrylate, lauryl (meth)acrylate and 2-ethylhexyl (meth)acrylate, a (meth)acrylate having ether bond in side chain such as polyethyleneglycol monomethyl ether (meth)acrylate and polypropyleneglycol monomethyl ether (meth)acrylate, and an aliphatic cyclic structure-containing (meth)acrylate such as *t*-butylcyclohexyl (meth)acrylate are particularly preferable.
The number average molecular weight of Component A-3 is preferably in the range of 1,000 to 100,000, more preferably 3,000 to 80,000, and yet more preferably 5,000 to 70,000. When the number average molecular weight of Component A-3 is in the range described above, a relief-forming layer and a relief layer which have excellent flexibility can be obtained.
The content of Component A-3 in the resin composition for laser engraving is preferably in the range of 5 wt% to 90 wt%, more preferably 15 wt% to 85 wt%, and yet more preferably 30 wt% to 80 wt%, relative to the solid content excluding volatile components (a solvent).

(Component A-4) Polyester resin having hydroxy group at molecular terminal

In the present invention, (Component A-4) a polyester resin having a hydroxy group at a molecular terminal may be used as Component A. Component A-4 is preferably a polyester resin having a hydroxy group at a main chain terminal.
Component A-4 is preferably a resin that is formed by an esterification reaction or a transesterification reaction between at least one polybasic acid component and at least one polyhydric alcohol component.
Specific examples of the polybasic acid component include dibasic acids such as phthalic acid, isophthalic acid, terephthalic acid, tetrahydrophthalic acid, hexahydrophthalic acid, succinic acid, fumaric acid, adipic acid, sebacic acid, and maleic acid; trivlaent or higher-valent polybasic acids such as trimellitic acid, methylcyclohexene tricarboxylic acid, and pyromellitic acid; and acid anhydrides thereof, for example, phthalic anhydride, tetrahydrophthalic anhydride,

hexahydrophthalic anhydride, maleic anhydride, trimellitic anhydride, and pyromellitic anhydride.

As the polybasic acid component, one or more dibasic acids selected from the dibasic acids described above, lower alkyl ester compounds of these acids, and acid anhydrides are mainly used. Furthermore, if necessary, a monobasic acid such as benzoic acid, crotonic acid or p-t-butylbenzoic acid; a trivalent or higher-valent polybasic acid such as trimellitic anhydride, methylcyclohexene tricarboxylic acid or pyromellitic anhydride; or the like can be further used in combination.

The polybasic acid component according to the present invention preferably includes at least adipic acid, from the viewpoint of ink transfer properties.

Specific examples of the polyhydric alcohol component include divalent alcohols such as ethylene glycol, diethylene glycol, propylene glycol, dipropylene glycol, 1,4-butanediol, neopentyl glycol, 1,5-pentanediol, 3-methylpentanediol, 1,4-hexanediol, and 1,6-hexanediol; and trivalent or higher-valent polyhydric alcohols such as glycerin, trimethylolethane, trimethylolpropane, and pentaerythritol.

As the polyhydric alcohol component, the divalent alcohols described above are mainly used, and if necessary, trivalent or higher-valent polyhydric alcohols such as glycerin, trimethylolethane, trimethylolpropane, and pentaerythritol can be further used in combination. These polyhydric alcohols can be used individually, or as mixtures of two or more kinds.

The polyhydric alcohol component according to the present invention preferably includes at least 3-methylpentanediol, from the viewpoint of storage stability.

The esterification reaction or transesterification reaction of the polybasic acid component and the polyhydric alcohol component can be carried out by using a usually used method without particular limitations.

Furthermore, it is preferable to adjust the ratio of starting materials so that there are more of the hydroxy groups in the polyhydric alcohol component than there are of the carboxyl groups in the polybasic acid component to thus introduce a hydroxy group at a terminal.

The number average molecular weight of Component A-4 is preferably in the range of 1,000 to 100,000, more preferably 1,000 to 50,000, yet more preferably 1,000 to 20,000, and particularly preferably 2,000 to 20,000. When the number average molecular weight of Component A-4 is in the range described above, a relief-forming layer and a relief layer having excellent flexibility can be obtained.

The content of Component A-4 in the resin composition for laser engraving is preferably 5 wt% to 90 wt%, more preferably 15 wt% to 85 wt%, and yet more preferably 30 wt% to 80 wt%, relative to the weight of the solids content excluding volatile components (a solvent).

(Component A-5) Polyurethane resin having hydroxy group at molecular terminal

In the present invention, (Component A-5) a polyurethane resin having a hydroxy group at a molecular terminal may be used as Component A. Component A-5 is preferably a polyurethane resin having a hydroxy group at a main chain terminal.

Component A-5 is formed by reacting at least one type of polyisocyanate and at least one type of polyhydric alcohol component.

Component A-5 preferably includes a polycarbonate diol formed from a repeating unit represented by Formula (4):

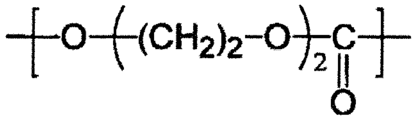

(4)

The repeating unit of Formula (4) may contain a linear and/or branched molecular chain. The polycarbonate diol can be produced from a corresponding diol by a known method (for example, JP-B-5-29648).

Component A-5 preferably further has a urethane bond and in addition has an ester bond in the molecule. When Component A-5 has the bonds described above, the resistance of a printing plate to an ink cleaning agent containing an ester-based solvent or an ink cleaning agent containing a hydrocarbon-based solvent, which are used in printing, tends to improve, which is preferable.

The method for producing Component A-5 is not particularly limited, and for example, a method of allowing a compound having a carbonate bond or an ester bond, and having plural reactive groups such as a hydroxy group and an isocyanate group, with a molecular weight of about several thousands, to react with a compound having plural functional groups that are capable of bonding with the reactive groups (for example, a polyisocyanate having a hydroxy group, an amino group or the like), and performing regulation of the molecular weight and conversion of the molecular terminal to bondable groups, and the like can be used.

Examples of the diol compound having a carbonate bond, which is used in the production of Component A-5,

include aliphatic polycarbonate diols such as 4,6-polyalkylene carbonate diol, 8,9-polyalkylene carbonate diol, and 5,6-polyalkylene carbonate diol. Furthermore, an aliphatic polycarbonate diol having an aromatic molecular structure in the molecule may also be used.

Furthermore, in the synthesis of Component A-5, the polyhydric alcohol component is not limited to the diol compound having a carbonate bond, and another polyhydric alcohol may be used. Examples of another polyhydric alcohol include a straight-chain terminal diol such as ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, or 1,20-eicosanediol, a diol having an ether group such as diethylene glycol, triethylene glycol, tetraethylene glycol, or polytetramethylene glycol, a thioether diol such as bishydroxyethyl thioether, a diol having branched chain such as 2-ethyl-1,6-hexanediol, 2-methyl-1,3-propanediol, 3-methyl-1,5-pentanediol, or 2,4-diethyl-1,5-pentanediol, a diol having a cyclic group in the molecule such as 1,3-cyclohexanediol, 1,4-cyclohexanediol, 1,4-cyclohexanedimethanol, 4,4-dicyclohexyldimethylmethanediol, 2,2'-bis(4-hydroxycyclohexyl)propane, 1,4-dihydroxyethylcyclohexane, isosorbide, 2,5-bis(hydroxymethyl)tetrahydrofuran, 4,4'-isopropylidenedicyclohexanol, and 4,4'-isopropylidenebis(2,2'-hydroxyethoxycyclohexane), a nitrogen-containing diol such as diethanolamine and *N*-methyldiethanolamine, and a sulfur-containing diol such as bis(hydroxyethyl)sulfide. These diols may be used singly, or a plurality thereof may be used in combination.

When the hydroxy groups at the terminal of these compounds are subjected to a condensation reaction with a diisocyanate compound such as tolylene diisocyanate, diphenylmethane diisocyanate, hexamethylene diisocyanate, isophorone diisocyanate, dicyclohexylmethane diisocyanate, tetramethylxylene diisocyanate, xylene diisocyanate, naphthalene diisocyanate, trimethylhexamethylene diisocyanate, *p*-phenylene diisocyanate, cyclohexylene diisocyanate, lysine diisocyanate, or triphenylmethane diisocyanate; or a triisocyanate compound such as triphenylmethane triisocyanate, 1-methylbenzene-2,4,6-triisocyanate, naphthalene-1,3,7-triisocyanate, or biphenyl-2,4,4'-triisocyanate, a urethane bond can be introduced to the compounds.

The number average molecular weight of Component A-5 is preferably in the range of 1,000 to 50,000, more preferably 1,000 to 45,000, yet more preferably 1,000 to 40,000, and particularly preferably 2,000 to 40,000. It is preferable for the number-average molecular weight of Component A-5 to be at least 1,000 so that the strength of a printing plate improves and it tends to withstand repeated use. On the other hand, it is preferable for the number-average molecular weight of Component A-5 to be no greater than 50,000 so that a printing plate tends to be easily made since the viscosity when molding a resin composition does not increase excessively.

The content of Component A-5 in the resin composition for laser engraving is preferably 5 wt% to 90 wt%, more preferably 15 wt% to 85 wt%, and yet more preferably 30 wt% to 80 wt%, relative to the weight of the solids content excluding volatile components (a solvent).

In the resin composition of the present invention, Component A can be used singly or in combination of two or more types.

The content of Component A in the resin composition is preferably 5 wt% to 90 wt%, more preferably 15 wt% to 85 wt%, and even more preferably 30 wt% to 80 wt%, relative to the total solids content. If the content of Component A is in the range described above, a relief layer having excellent rinsing properties of engraving residue and excellent ink transfer properties can be obtained, which is preferable.

The resin composition for laser engraving of the present invention may comprise a binder polymer (resin component) other than Component A. The examples of the binder polymer other than Component A include the non-elastomers described in JP-A-2011-136455, and the unsaturated group-containing polymers described in JP-A-2010-208326.

The resin composition for laser engraving of the present invention preferably comprises Component A as a main component of the binder polymers (resin component), and if the resin composition comprises other binder polymers, the content of Component A relative to the total weight of the binder polymers is preferably 60 wt% or greater, more preferably 70 wt% or greater, yet more preferably 80 wt% or greater, and particularly preferably 95 wt% or greater. Meanwhile, the upper limit of the content of Component A is not particularly limited.

(Component B) Crosslinking agent

The resin composition for laser engraving of the present invention comprises (Component B) a crosslinking agent.

In the present invention, the crosslinking agent may be one that crosslinks Component A molecules themselves or one in which Component B molecules themselves crosslink, and is not particularly limited.

Component B is preferably a compound having a low molecular weight; the molecular weight is preferably 100 to 5,000, more preferably 200 to 4,000, yet more preferably at least 300 but less than 3,000, and particularly preferably at least 300 but less than 2,000. When the molecular weight is in this range, the relief layer obtained has excellent printing durability.

When designing the resin composition for laser engraving, combining a compound having a relatively large

molecular weight (Component A) and a compound having a relatively small molecular weight (Component B) is effective in producing a composition that exhibits excellent mechanical properties after being cured. When designing a resin composition with only a low molecular weight compound, there is the problem that a cured material shows large shrinkage and curing takes time. When designing a resin composition with only a high molecular weight compound, curing does not progress, and a cured material showing excellent physical properties cannot be obtained. It is therefore preferable in the present invention to use Component A, which has a large molecular weight, and Component B, which has a small molecular weight, in combination.

Examples of Component B include (Component B-1) a (meth)acrylate compound, (Component B-2) a polyfunctional isocyanate compound, and (Component B-3) a silane coupling agent.

They are explained individually below.

(Component B-1) (Meth)acrylate compound

In the present invention, (Component B-1) a (meth)acrylate compound may be used as Component B. Here, a (meth)acrylate compound means an acrylate compound or a methacrylate compound.

Component B-1 is an organic compound that preferably has a number-average molecular weight of less than 1,000 and has at least one (meth)acryloyl group per molecule. Taking into consideration the ease of mixing of Component B-1 and Component A, the number-average molecular weight of Component B-1 is preferably less than 1,000.

Component B-1 is not particularly limited as long as it is a compound having at least one (meth)acryloyl group in the molecule, and from the viewpoint of reaction rate and curing uniformity the number of (meth)acryloyl groups per molecule is preferably no greater than 10, more preferably 1 to 8, yet more preferably 1 to 6, and yet more preferably 2 to 4.

Specific examples of Component B-1 include (meth)acrylic acid and derivatives thereof.

Examples of derivatives of the compound include a compound having an alicyclic skeleton such as a cycloalkyl, bicycloalkyl, cycloalkene, or bicycloalkene skeleton; a compound having an aromatic skeleton such as a benzyl, phenyl, phenoxy, or fluorene skeleton; and an ester such as an alkyl, haloalkyl, alkoxyalkyl, hydroxyalkyl, aminoalkyl, tetrahydrofurfuryl, allyl, glycidyl, alkylene glycol, polyoxyalkylene glycol, or (alkyl/allyloxy)polyalkylene glycol ester or an ester of a polyhydric alcohol such as trimethylolpropane. Furthermore, it may be a heteroaromatic compound containing a heteroatom such as nitrogen or sulfur. For example, in order to suppress swelling due to an organic solvent such as an ester or an alcohol, which is a solvent of a printing ink, Component B-1 preferably comprises a compound having a long-chain aliphatic, alicyclic, or aromatic skeleton. The long-chain aliphatic skeleton or alicyclic skeleton may contain a heteroelement, and examples thereof include an oxygen atom, a sulfur atom, and a nitrogen atom.

Furthermore, in order to enhance the rebound resilience of a printing plate, Component B-1 may be appropriately selected using known technical expertise regarding photosensitive resins for printing plates (e.g. a methacrylic monomer described in JP-A-7-239548).

With regard to Component B-1 in the resin composition of the present invention, only one type thereof may be used or two or more types may be used in combination.

(Component B-2) Polyfunctional isocyanate compound

In the present invention, (Component B-2) a polyfunctional isocyanate compound may be used as Component B.

Examples of the polyfunctional isocyanate compound include a diisocyanate compound comprising two isocyanato groups and a compound having an average number of isocyanato groups, fn, of greater than 2.

As the diisocyanate compound, a compound represented by Fomula (5) below is preferable.

$$OCN\text{-}L^1\text{-}NCO \qquad (5)$$

In the above-mentioned Formula (5), $L^1$ represents a divalent aliphatic or aromatic hydrocarbon group which may be substituted. According to necessity, $L^1$ may have another functional group which does not react with an isocyanate group, for example, an ester group, a urethane group, an amide group, or an ureido group.

Examples of Component B-2 include an aliphatic diisocyanate compound, an alicyclic diisocyanate compound, an aromatic-aliphatic diisocyanate compound, and an aromatic diisocyanate compound.

Examples of the aliphatic diisocyanate compound include 1,3-trimethylene diisocyanate, 1,4-tetramethylene diisocyanate, 1,3-pentamethylene diisocyanate, 1,5-pentamethylene diisocyanate, 1,6-hexamethylene diisocyanate, 1,2-propylene diisocyanate, 1,2-butylene diisocyanate, 2,3-butylene diisocyanate, 1,3-butylene diisocyanate, 2-methyl-1,5-pentamethylene diisocyanate, 3-methyl-1,5-pentamethylene diisocyanate, 2,4,4-trimethyl-1,6-hexamethylene diisocyanate, 2,2,4-trimethyl-1,6-hexamethylene diisocyanate, 2,6-diisocyanate methyl caproate, and lysine diisocyanate.

Examples of the alicyclic diisocyanate compound include 1,3-cyclopentane diisocyanate, 1,4-cyclohexane diisocyanate, 1,3-cyclohexane diisocyanate, 3-isocyanatomethyl-3,5,5-trimethylcyclohexyl isocyanate, 4,4'-methylenebis(cyclohexyl isocyanate), methyl-2,4-cyclohexane diisocyanate, methyl-2,6-cyclohexane diisocyanate, 1,3-bis(isocyanatomethyl)cyclohexane, 1,4-bis(isocyanatomethyl)cyclohexane, isophorone diisocyaante, and norbornane diisocyanate.

Examples of the aromatic-aliphatic diisocyanate compound include 1,3-xylene diisocyanate, 1,4-xylene diisocyanate, $\omega,\omega$'-diisocyanato-1,4-diethylbenzene, 1,3-bis(1-isocyanato-1-methylethyl)benzene, 1,4-bis(1-isocyanato-1-methylethyl)benzene, and 1,3-bis($\alpha,\alpha$-dimethylisocyanatomethyl)benzene.

Examples of the aromatic diisocyanate compound include *m*-phenylene diisocyanate, *p*-phenylene diisocyanate, 2,4-tolylene diisocyanate, 2,6-tolylene diisocyanate, naphthylene-1,4-diisocyanate, 1,5-naphthalene diisocyanate, 4,4'-diphenyl diisocyanate, 4,4'-diphenylmethane diisocyanate, 2,4'-diphenylmethane diisocyanate, 4,4'-diphenyl ether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, and 3,3'-dimethoxydiphenyl-4,4'-diisocyanate.

Examples of Component B-2 include tolylene diisocyanate (hereinafter, abbreviated to TDI), diphenylmethane diisocyanate (hereinafter, abbreviated to MDI), hexamethylene diisocyanate (hereinafter, abbreviated to HDI), isophorone diisocyanate (hereinafter, abbreviated to IPDI), diphenylmethane diisocyanate including a diphenylmethane diisocyanate dimer compound, carbodiimide-modified diphenylmethane diisocyanate, and uretdione ring- and isocyanurate ring-containing modification products of hexamethylene diisocyanate, and these can be used individually or in combination.

Examples of Coomponent B-2 include an isocyanate compound having an average number of isocyanato groups, fn, of greater than 2. The average number of isocyanato groups, fn, is not particularly limited if it is greater than 2, but the average number is preferably greater than 2 and equal to or less than 4, more preferably 2.2 to 3.8, and even more preferably 2.4 to 3.6. If the average number of isocyanato groups, fn, is greater than 2, high crosslinking density can be obtained. As long as the average number of isocyanato groups, fn, is in the range described above, the isocyanate compound may be a single isocyanate compound, or may include any unreacted isocyanate compound that is produced as a side product at the time of the production of the isocyanate compound. The average number of isocyanato groups, fn, can be determined by the following formula:

$$\text{Average number of isocyanato groups} = (\text{Number average molecular weight}) \times (\text{Isocyanato group wt\%}) / (\text{Formula weight of isocyanato } (42) \times 100)$$

The compound having average number of isocyanato groups, fn, of greater than 2 preferably includes at least one chemical structure selected from the group consisting of isocyanurate, uretdione, allophanate, and biuret.

Examples of the compound having an isocyanurate structure include an isocyanurate trimer, and an isocyanurate pentamer, and oligomers such as an isocyanurate heptamer, a nonamer and higher oligomers are also available.

An isocyanurate trimer is a polyisocyanate having isocyanurate groups, which is formed from three molecules of a diisocyanate monomer, and the isocyanurate trimer is represented by Formula (5) below.

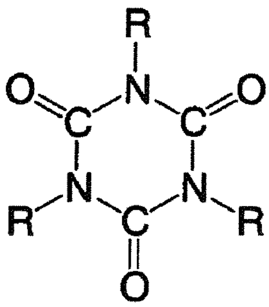

(5)

In Formula (5), R denotes a diisocyanate monomer residue.

An isocyanurate pentamer is a polyisocyanate having an isocyanurate structure, which is formed from six molecules of a diisocyanate monomer, and the isocyanurate pentamer is represented by Formula (6) below.

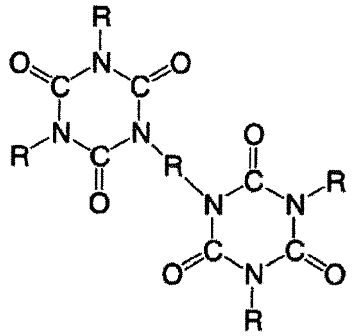

(6)

In Formula (6), R denotes a diisocyanate monomer residue.

A compound having an allophanate structure is formed from a hydroxyl group of a monoalcohol and an isocyanato group, and is represented by Formula (7) below.

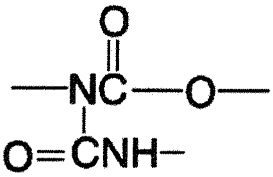

(7)

An example of a compound having a uretdione structure may be a uretdione dimer. A uretdione dimer is a compound having a uretdione group, which is formed from two molecules of a diisocyanate monomer, and the uretdione dimer is represented by Formula (8) below.

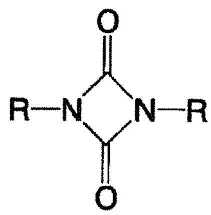

(8)

In Formula (8), R denotes a diisocyanate monomer residue.

A compound having a biuret structure is formed from an urea and an isocyanato group, and is represented by Formula (9) below.

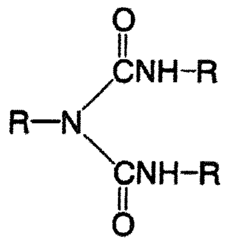

(9)

In Formula (9), R denotes a diisocyanate monomer residue.

As the compound having average number of isocyanato groups, fn, of greater than 2, commercially available products can also be employed, and examples include Duranate TPA-100, Duranate TKA-100, Duranate TLA-100, Duranate TSA-100, Duranate TSE-100, Duranate TSS-100, Duranate TSR-100, and Duranate 24A-100 (all manufactured by Asahi Chemical Corp.).

With regard to Component B-2 in the resin composition of the present invention, one type may be used on its own or two or more types may be used in combination.

(Component B-3) Silane coupling agent

(Component B-3) A silane coupling agent may be used as Component B in the preset invention.

In the present invention, the functional group in which at least one hydoroxy group, alkoxy group or halogen atom is directly bonded to a Si atom is called a silane coupling group, and the compound which has one or more silane coupling groups in the molecule is also called a silane coupling agent. The silane coupling group is preferable in which two or more hydroxy groups, alkoxy groups or halogen atoms are directly bonded to a Si atom (hereinafter, also called a silanol group or hydrolyzable silyl group), and the silane coupling group is more preferable in which three or more groups or halogen atoms are directly bonded to a Si atom.

In the resin composition of the present invention, if the reactive functional group of Component A is for example a hydroxy group (-OH), the silane coupling group of Component B-3 undergoes an alcohol exchange reaction with this hydroxy group, thus forming a crosslinked structure. As a result, Component A molecules themselves are three-dimensionally crosslinked via the silane coupling agent. Furthermore, Component B-3 molecules themselves may form a crosslinked structure.

In Component B-3, as a functional group directly bonded to the Si atom, it is indispensable to have at least one or more functional groups selected from a hydroxy group, an alkoxy group and a halogen atom, and one having an alkoxy group is preferable from the viewpoint of ease of handling of the compound.

Here, with regard to the alkoxy group from the viewpoint of rinsing properties and printing durability, an alkoxy group having 1 to 30 carbon atoms is preferable. An alkoxy group having 1 to 15 carbon atoms is more preferable, and an alkoxy group having 1 to 5 carbon atoms is yet more preferable.

Moreover, as a halogen atom, an F atom, a Cl atom, a Br atom, and an I atom are included; from the viewpoint of ease of synthesis and stability, a Cl atom and a Br atom are preferable, and a Cl atom is more preferable.

The silane coupling agent in the present invention preferably contains at least 2 of above silane coupling groups within the molecule from the viewpoint of favorably maintaining a balance of the degree of crosslinking of the film and flexibility, more preferably contains at least 2 but no greater than 10, yet more preferably contains at least 2 but no greater than 5, and particularly preferably contains at least 2 but no greater than 4.

In addition, when the silane coupling agent has only one silane coupling group in the molecule, the silane coupling agent particularly preferably has at least two silanol groups or hydrolyzable silyl groups. That is, the silane coupling group is preferably one in which at least two hydroxy groups, alkoxy groups, or halogen atoms are bonded directly to the Si atom.

When there are two or more of silane coupling groups, it is preferable that silane coupling groups are connected with the linking group each other. Examples of the linking group include a divalent or higher-valent organic group which may have substituents such as a hetero atom and hydrocarbons, from the viewpoint of high engraving sensitivity, an aspect containing hetero atoms (N, S, O) is preferable, and a linking group containing an S atom is particularly preferable.

From these viewpoints, as the silane coupling agent in the present invention, a compound that having in the molecule two silane coupling groups in which the methoxy group or ethoxy group, particulary a methoxy group is bonded to a Si atom as an alkoxy group and these silane coupling groups are bonded through an alkylene group containing a hetero atom (particularly preferably a S atom) is preferable. More specifically, one having a linking group containing a sulfide group is preferable.

Moreover, as another preferred aspect of the linking group connecting together silane coupling groups, a linking group having an oxyalkylene group is included. Since the linking group contains an oxyalkylene group, rinsing properties of engraving residue after laser engraving are improved. As the oxyalkylene group, an oxyethylene group is preferable, and a polyoxyethylene chain in which a plurality of oxyethylene groups are connected is more preferable. The total number of oxyethylene groups in the polyoxyethylene chain is preferably 2 to 50, more preferably 3 to 30, particularly preferably 4 to 15.

Specific examples of the silane coupling agent that can be applied in the present invention are shown below. Examples of the silane coupling agent in the present invention include β-(3,4-epoxycyclohexyl)ethyltrimethoxysilane, γ-glycidoxypropyltrimethoxysilane, γ-glycidoxypropylmethyldiethoxysilane, γ-glycidoxypropyltriethoxysilane, *N*-(β-aminoethyl)-γ-aminopropylmethyldimethoxysilane, *N*-(β-aminoethyl)-γ-aminopropyltrimethoxysilane, *N*-(β-aminoethyl)-γ-aminopropyltriethoxysilane, γ-aminopropyltrimethoxysilane, γ-aminopropyltriethoxysilane, *N*-phenyl-γ-aminopropyltrimethoxysilane, γ-mercaptopropyltrimethoxysilane, γ-mercaptopropyltriethoxysilane, bis(triethoxysilylpropyl) disulfide, bis(triethoxysilylpropyl) tetrasulfide, 1,4-bis(triethoxysilyl)benzene, bis(triethoxysilyl)ethane, 1,6-bis(trimethoxysilyl)hexane, 1,8-bis(triethoxysilyl)octane, 1,2-bis(trimethoxysilyl)decane, bis(triethoxysilylpropyl)amine, bis(trimethoxysilylpropyl)urea, γ-chloropropyltrimethoxysilane, γ-ureidopropyltriethoxysilane. Other than the above, the compounds shown below can be cited as preferred examples, but the present invention should not be construed as being limited thereto.

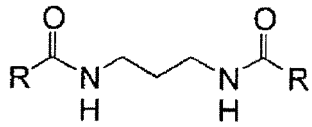
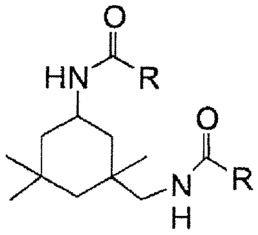

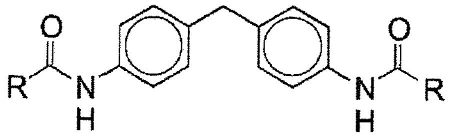
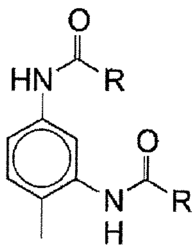

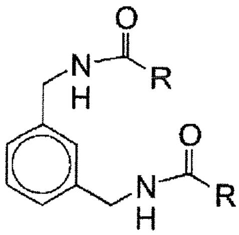
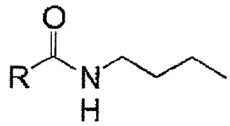

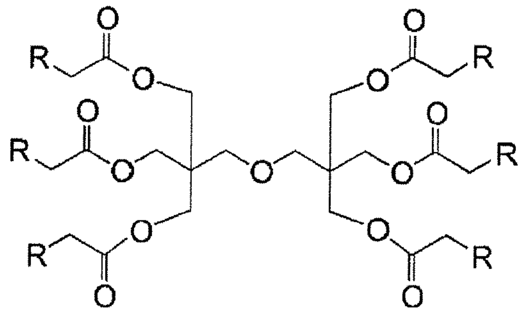

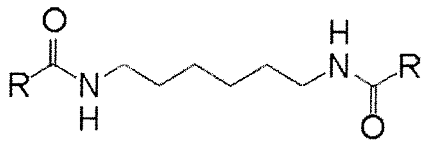

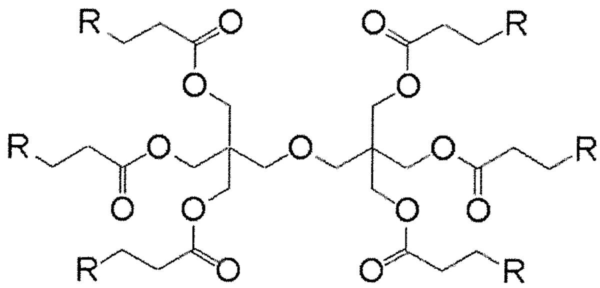

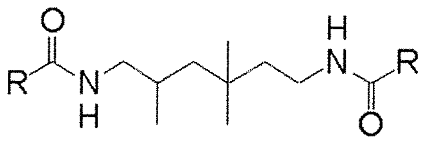
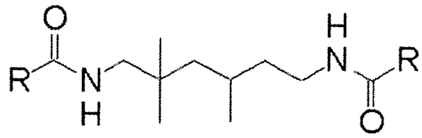

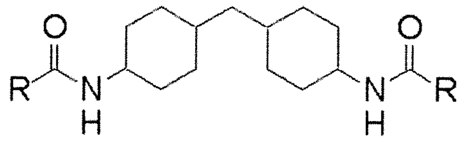

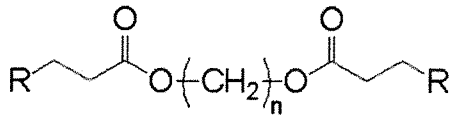

n = 2∼20

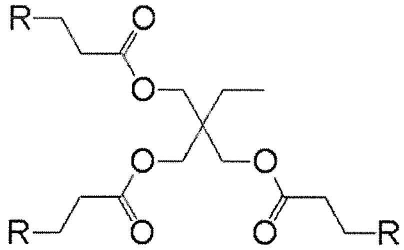

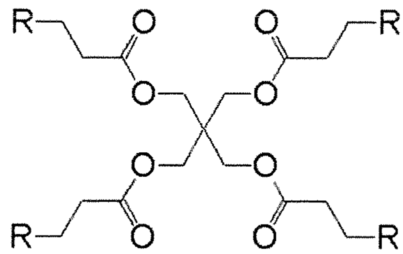

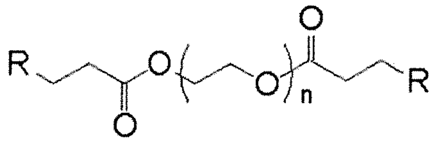

n = 1∼50

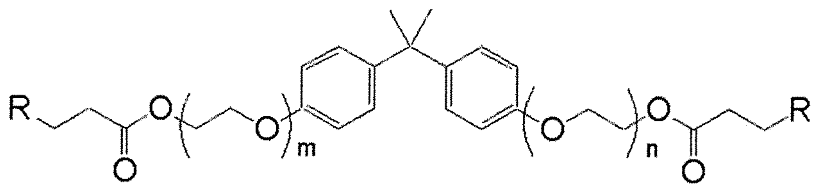

m + n = 2∼50

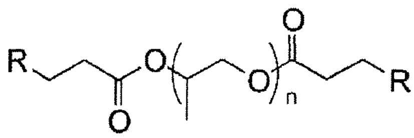

n =1∼50

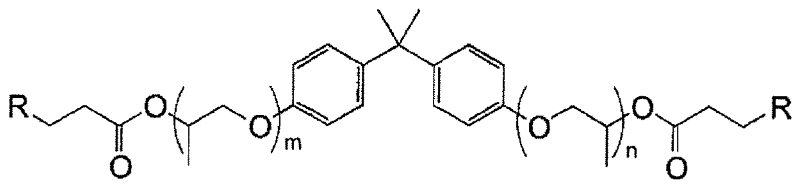

m + n = 2∼50

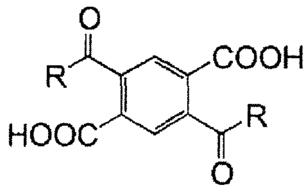

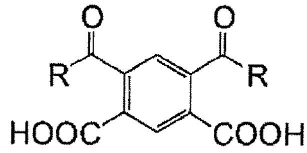

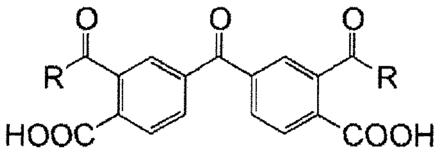

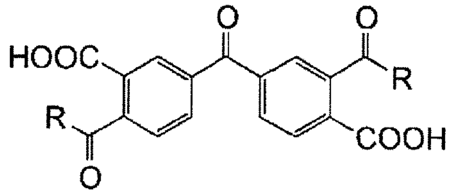

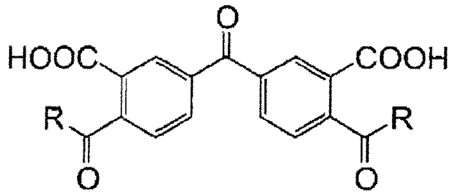

R-S-S-R

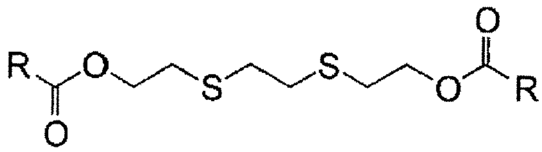

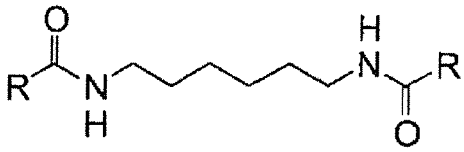

In each of the formulae above, R denotes a partial structure selected from the structures below. When a plurality of Rs and $R^1$s are present in the molecule, they may be identical to or different from each other, and are preferably identical to each other in terms of synthetic suitability.

R : 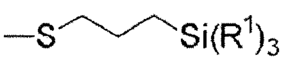 OR 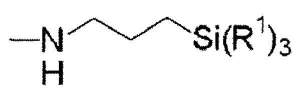

$R^1$ : —OMe , —OEt , 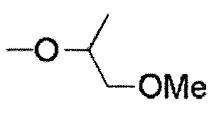

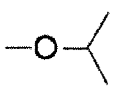 , 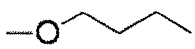 OR 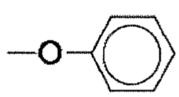

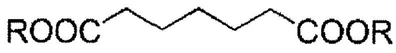
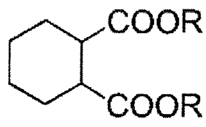

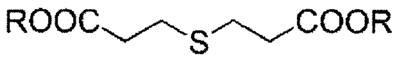
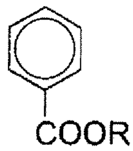

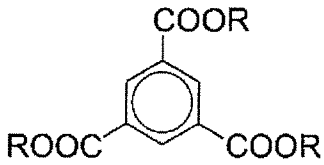
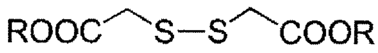

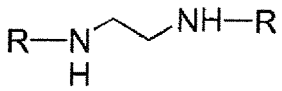
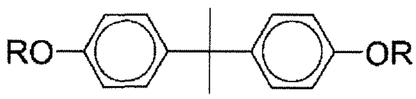

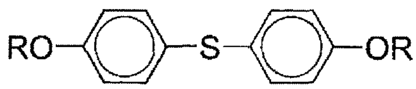
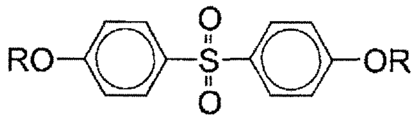

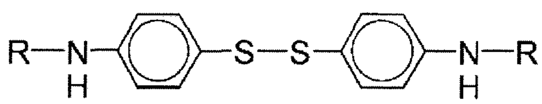

In each of the formulae above, R denotes a partial structure selected from the structures below. $R^1$ is the same as defined above. When a plurality of Rs and $R^1$s are present in the molecule, they may be identical to or different from each other, and are preferably identical to each other in terms of synthetic suitability.

R : 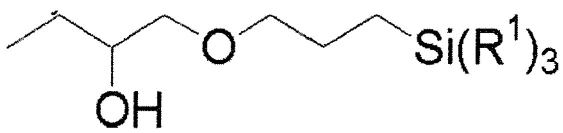

Component B-3 may be obtained by synthesis as appropriate, but use of a commercially available product is preferable in terms of cost. Since Component B-3 corresponds to for example commercially available silane products or silane coupling agents from Shin-Etsu Chemical Co., Ltd., Dow Corning Toray, Momentive Performance Materials Inc., Chisso Corporation, etc., the resin composition of the present invention may employ such a commercially available product by appropriate selection according to the intended application.

As Component B-3 in the present invention, a partial hydrolysis-condensation product obtained using one type of compound having a hydrolyzable silyl group and/or a silanol group or a partial cohydrolysis-condensation product obtained using two or more types may be used. Hereinafter, these compounds may be called 'partial (co)hydrolysis-condensation products'.

Specific examples of such a partial (co)hydrolysis-condensation product include a partial (co)hydrolysis condensaste obtained by using, as a precursor, one or more selected from the group of silane compounds consisting of alkoxysilanes or acetyloxysilanes such as tetramethoxysilane, tetraethoxysilane, methyltrimethoxysilane, methyltriethoxysilane, methyltriisopropoxysilane, methyltriacetoxysilane, methyltris(methoxyethoxy)silane, methyltris(methoxypropoxy)silane, ethyltrimethoxysilane, propyltrimethoxysilane, butyl trimethoxysilane, hexyltrimethoxysilane, octyltrimethoxysilane, decyltrimethoxysilane, cyclohexyltrimethoxysilane, phenyltrimethoxysilane, phenyltriethoxysilane, tolyltrimethoxysilane, chloromethyltrimethoxysilane, γ-chloropropyltrimethoxysilane, 3,3,3-trifluoropropyltrimethoxysilane, cyanoethyltriethoxysilane, γ-glycidoxypropyltrimethoxysilane, γ-glycidoxypropyltriethoxysilane, β-(3,4-epoxycyclohexyl)ethyltrimethoxysilane, γ-aminopropyltrimethoxysilane, γ-aminopropyltriethoxysilane, *N*-β-(aminoethyl)-γ-aminopropyltrimethoxysilane, *N*-phenyl-γ-aminopropyltrimethoxysilane, γ-mercaptopropyltrimethoxysilane, dimethyldimethoxysilane, dimethyldiethoxysilane, diethyldimethoxysilane, methylethyldimethoxysilane, methylpropyldimethoxysilane, diphenyldimethoxysilane, diphenyldiethoxysilane, methylphenyldimethoxysilane, γ-chloropropylmethyldimethoxysilane, 3,3,3-trifluoropropylmethyldimethoxysilane, γ-glycidoxypropylmethyldiethoxysilane, γ-aminopropylmethyldiethoxysilane, *N*-β-(aminoethyl)-γ-aminopropylmethyldimethoxysilane and γ-mercaptopropylmethyldiethoxysilane, and an acyloxysilane such as ethoxalyloxysilane.

Among silane compounds as partial (co)hydrolysis-condensation product precursors, from the viewpoint of versatility, cost, and film compatibility, a silane compound having a substituent selected from a methyl group and a phenyl group as a substituent on the silicon is preferable. Specific preferred examples of the precursor include methyltrimethoxysilane, methyltriethoxysilane, phenyltrimethoxysilane, phenyltriethoxysilane, dimethyldimethoxysilane, dimethyldiethoxysilane, diphenyldimethoxysilane, and diphenyldiethoxysilane.

In this case, as a partial (co)hydrolysis-condensation product, it is preferable to use a dimer (2 moles of silane compound is reacted with 1 mole of water to eliminate 2 moles of alcohol, thus giving a disiloxane unit) of the silane compounds cited above to 100-mer of the above-mentioned silane compound, more preferably a dimer to 50-mer, and yet more preferably a dimer to 30-mer, and it is also possible to use a partial (co)hydrolysis-condensation product formed using two or more types of silane compounds as starting materials.

As such a partial (co)hydrolysis-condensation product, ones commercially available as silicone alkoxy oligomers may be used (e.g. those from Shin-Etsu Chemical Co., Ltd.) or ones that are produced in accordance with a standard method by reacting a hydrolyzable silane compound with less than an equivalent of hydrolytic water and then removing by-products such as alcohol and hydrochloric acid may be used. When the production employs, for example, an acyloxysilane or an alkoxysilane described above as a hydrolyzable silane compound starting material, which is a precursor, partial hydrolysis-condensation may be carried out using as a reaction catalyst an acid such as hydrochloric acid or sulfuric acid, an alkali metal or alkaline earth metal hydroxide such as sodium hydroxide or potassium hydroxide, or an alkaline organic material such as triethylamine, and when the production is carried out directly from a chlorosilane, water and alcohol may be reacted using hydrochloric acid by-product as a catalyst.

Furthermore, as other silane coupling agent, a compound having only one silane coupling group may be used.

Specific examples of the compound having only one silane coupling group include vinyltrichlorosilane, vinyltrimethoxysilane, vinyltriethoxysilane, β-(3,4-epoxycyclohexyl)ethyltrimethoxysilane, γ-glycidoxypropyltrimethoxysilane,γ -glycidoxypropylmethyldiethoxysilane, γ-glycidoxypropyltriethoxysilane, γ-methacryloxypropylmethyldimethoxysilane, *p*-styryltrimethoxysilane, γ-methacryloxypropyltrimethoxysilane, γ-methacryloxypropylmethyldiethoxysilane, γ-methacryloxypropyltriethoxysilane, γ-acryloxypropyltrimethoxysilane, *N*-(β-aminoethyl)-γ-aminopropylmethyldimethoxysilane, *N*-(β-aminoethyl)-γ-aminopropyltrimethoxysilane, *N*-(β-aminoethyl)-γ-aminopropyltriethoxysilane, γ-aminopropyltrimethoxysilane, γ-aminopropyltriethoxysilane, *N*-phenyl-γ-aminopropyltrimethoxysilane, γ-mercaptopropyltrimethoxysilane, γ-mercaptopropyltriethoxysilane, mercaptomethyltrimethoxysilane, dimethoxy-3-mercaptopropylmethylsilane, 2-(2-aminoethylthioethyl)diethoxymethylsilane, 3-(2-acetoxyethylthiopropyl)dimethoxymethylsilane, 2-(2-aminoethylthioethyl)triethoxysilane, dimethoxymethyl-3-(3-phenoxypropylthiopropyl)silane, γ-chloropropyltrimethoxysilane, γ-ureidopropyltriethoxysilane, diphenylsilanediol, methyltrimethoxysilane, methyltriethoxysilane, phenyltrimethoxysilane, phenyltriethoxysilane, dimethyldimethoxysilane, dimethyldiethoxysilane, diphenyldimethoxysilane, and diphenyldiethoxysilane.

With regard to Component B-3 in the resin composition of the present invention, one type may be used on its own or two or more types may be used in combination.

In the present invention, with regard to Component B, one type may be used on its own or two or more types may be used in combination.

The content of Commponent B in the resin composition is preferably 0.1 wt% to 80 wt%, more preferably 1 wt% to 60 wt%, and yet more preferably 5 wt% to 40 wt% relative to the total solid content. When the content of Component B is in this range, a relief-forming layer having excellent rinsing properties of engraving residue and printing durability can be obtained.

In the present invention, examples of preferred combinations of Component A and Component B include the (Component A, Component B) combinations shown below.

1. (polycarbonate polyol, (meth)acrylate compound)
2. (polysiloxane polyol, (meth)acrylate compound)
3. (acrylic resin, (meth)acrylate compound)
4. (polyester resin having hydroxy group at molecular terminal, (meth)acrylate compound)
5. (polyurethane resin having hydroxy group at molecular terminal, (meth)acrylate compound)
6. (acrylic resin, polyfunctional isocyanate compound)
7. (polyester resin having hydroxy group at molecular terminal, polyfunctional isocyanate compound)
8. (polyurethane resin having hydroxy group at molecular terminal, polyfunctional isocyanate compound)

9. (polysiloxane polyol, silane coupling agent)
10. (acrylic resin, silane coupling agent)
11. (polyester resin having hydroxy group at molecular terminal, silane coupling agent)
12. (polyurethane resin having hydroxy group at molecular terminal, silane coupling agent)

In the present invention, among the combinations of Component A and Component B, combinations 9 to 12, in which the crosslinking agent is a silane coupling agent, are particularly preferable. In accordance with use of a silane coupling agent as the crosslinking agent, a resin composition having excellent crosslinkablility can be obtained.

A (meth)acrylate compound and a silane coupling agent can cure a relief-forming layer by means of a crosslinking reaction between crosslinking agents themselves. Therefore, when Component B is a (meth)acrylate compound or a silane coupling agent, reactivity of Component A with Component B is not always necessary. On the other hand, when Component B is a polyfunctional isocyanate compound, it is necessary for Component A to have a group that reacts with an isocyanate group. In the above modes 7 and 8, a hydroxy group of Component A reacts with an isocyanate group to thus form a crosslinked structure. In the above mode 6, it is preferable for the acrylic resin to have an active hydrogen group, and it is more preferable for the acrylic resin to have at least two active hydrogen groups per molecule.

The ratio of the amounts added of Component A and Component B in the resin composition is preferably 90:10 to 10:90 as Component A:Component B (ratio by weight), more preferably 80:20 to 20:80, and yet more preferably 60:40 to 40:80.

Various types of components that the resin composition of the present invention can contain in addition to Component A and Component B are now explained.

(Component C) Alcohol exchange reaction catalyst

The resin composition of the present invention preferably comprises (Component C) an alcohol exchange reaction catalyst in order to promote formation of a crosslinked structure of Component A with Component B. In particular, when (Component B-2) a polyfunctional isocyanate compound and/or (Component B-3) a silane coupling agent is contained as Component B, it is preferable for it to comprise (Component C) an alcohol exchange reaction catalyst, and when (Component B-3) a silane coupling agent is contained as a crosslinking agent, it is particularly preferable for it to comprise Component C.

The alcohol exchange reaction catalyst (Component C) may be used without any limitation as long as it is a reaction catalyst that is usually used in a silane coupling reaction.

(Component C-1) an acid or basic catalyst and (Component C-2) a metal complex catalyst, which are representative alcohol exchange reaction catalysts, are explained below in that order.

(Component C-1) Acidic or basic catalyst

As the catalyst, an acidic or basic compound is used as it is or in the form of a solution in which it is dissolved in a solvent such as water or an organic solvent (hereinafter, called an acidic catalyst or basic catalyst respectively). The concentration when dissolving in a solvent is not particularly limited, and it may be selected appropriately according to the properties of the acidic or basic compound used, desired catalyst content, etc.

Type of acidic catalyst and the basic catalyst is not particularly limited, and examples of the acidic catalyst include a hydrogen halide such as hydrochloric acid, nitric acid, sulfuric acid, sulfurous acid, hydrogen sulfide, perchloric acid, hydrogen peroxide, carbonic acid, a carboxylic acid such as formic acid or acetic acid, a substituted carboxylic acid in which R of the structural formula RCOOH is substituted with another element or substituent, a sulfonic acid such as benzenesulfonic acid, phosphoric acid, a heteropoly acid, and an inorganic solid acid, and examples of the basic catalyst include an ammoniacal base such as aqueous ammonia, an amine such as ethyl amine or aniline, an alkali metal hydroxide, an alkali metal alkoxide, an alkaline earth oxide, a quaternary ammonium salt compound, and a quaternary phosphonium salt compound.

As the basic catalyst that can be used in the present invention, an amine is explained as an example below.

Examples of the amine include compounds (a) to (e) shown below.

(a) a nitrogen hydride compound such as hydrazine;
(b) an aliphatic, aromatic or alicyclic, primary, secondary, or tertiary monoamine or polyamine such as diamine, triamine, etc.;
(c) a monoamine or polyamine which is a cyclic amine, including a condensed ring, and in which at least one nitrogen atom is contained in the ring skeleton;
(d) an oxygen-containing amine such as an amino acid, an amide, an alcoholamine, an ether amine, an imide, or a lactam;

(e) a hetero element-containing amine containing a heteroatom such as O, S, or Se.

In the case of a secondary or tertiary amine, the substituents on the nitrogen atom (N) may be identical to or different from each other, and among these substituents one or more may be different and the others identical to each other.

Specific examples of the amine include hydrazine,
a primary amine such as monomethylamine, monoethylamine, a monopropylamine, a monobutylamine, a monopentylamine, a monohexylamine, a monoheptylamine, vinylamine, allylamine, a butenylamine, a pentenylamine, a hexenylamine, a pentadienylamine, a hexadienylamine, cyclopentylamine, cyclohexylamine, cyclooctylamine, *p*-menthylamine, a cyclopentenylamine, a cyclohexenylamine, a cyclohexadienylamine, aniline, benzylamine, naphthylamine, naphthylmethylamine, toluidine, a tolylenediamine, amitrole, ethylenediamine, ethylenetriamine, monoethanolamine, aminothiophene, glycine, alanine, phenylalanine, or aminoacetone.

Examples of the secondary amine include dimethylamine, diethylamine, a dipropylamine, a dibutylamine, a dipentylamine, a dihexylamine, methylethylamine, a methylpropylamine, a methylbutylamine, a methylpentylamine, a methylhexylamine, an ethylpropylamine, an ethylbutylamine, an ethylpentylamine, a propylbutylamine, a propylpentylamine, a propylhexylamine, a butylpentylamine, a pentylhexylamine, divinylamine, diallylamine, a dibutenylamine, a dipentenylamine, a dihexenylamine, methylvinylamine, methylallylamine, a methylbutenylamine, a methylpentenylamine, a methylhexenylamine, ethylvinylamine, ethylallylamine, ethylbutenylamine, an ethylpentenylamine, an ethylhexenylamine, a propylvinylamine, a propylallylamine, a propylbutenylamine, a propylpentenylamine, a propylhexenylamine, a butylvinylamine, a butylallylamine, a butylbutenylamine, a butylpentenylamine, a butylhexenylamine, vinylallylamine, a vinylbutenylamine, a vinylpentenylamine, a vinylhexenylamine, an allylbutenylamine, an allylpentenylamine, an allylhexenylamine, a butenylpentenylamine, a butenylhexenylamine, dicyclopentylamine, dicyclohexyl, methylcyclopentylamine, methylcyclohexylamine, methylcyclooctylamine, ethylcyclopentylamine, ethylcyclohexylamine, ethylcyclooctylamine, a propylcyclopentylamine, a propylcyclohexylamine, a butylcyclopentylamine, a butylcyclohexylamine, a hexylcyclopentylamine, a hexylcyclohexylamine, a hexylcyclooctylamine, vinylcyclopentylamine, vinylcyclohexylamine, vinylcyclooctylamine, allylcyclopentylamine, allylcyclohexylamine, allylcyclooctylamine, a butenylcyclopentylamine, a butenylcyclohexylamine, a butenylcyclooctylamine, a dicyclopentenylamine, a dicyclohexenylamine, a dicyclooctenylamine, a methylcyclopentenylamine, a methylcyclohexenylamine, a methylcyclooctenylamine, an ethylcyclopentenylamine,
an ethylcyclohexenylamine, an ethylcyclooctenylamine, a propylcyclopentenylamine, a propylcyclohexenylamine, a butylcyclopentenylamine, a butylcyclohexenylamine, a vinylcyclopentenylamine, a vinylcyclohexenylamine, a vinylcyclooctenylamine, an allylcyclopentenylamine, an allylcyclohexenylamine, a butenylcyclopentenylamine, a butenylcyclohexenylamine, dicyclopentadienylamine, a dicyclohexadienylamine, a dicyclooctadienylamine, methylcyclopentadienylamine, a methylcyclohexadienylamine, ethylcyclopentadienylamine, an ethylcyclohexadienylamine, a propylcyclopentadienylamine, a propylcyclohexadienylamine, a dicyclooctatrienylamine, a methylcyclooctatrienylamine, an ethylcyclooctatrienylamine, vinylcyclopentadienylamine, a vinylcyclohexadienylamine, allylcyclopentadienylamine, an allylcyclohexadienylamine, diphenylamine, a ditolylamine, dibenzylamine, a dinaphthylamine, *N*-methylaniline, *N*-ethylaniline, an *N*-propylaniline, an *N*-butylaniline, *N*-methyltoluidine, *N*-ethyltoluidine, an *N*-propyltoluidine, an *N*-butyltoluidine, *N*-methylbenzylamine, an *N*-ethylbenzylamine, an *N*-propylbenzylamine, an *N*-butylbenzylamine, an *N*-methylnaphthylamine, an *N*-ethylnaphthylamine, an *N*-propylnaphthylamine, *N*-vinylaniline, *N*-allylaniline, *N*-vinylbenzylamine, *N*-allylbenzylamine, *N*-vinyltoluidine, *N*-allyltoluidine, phenylcyclopentylamine, phenylcyclohexylamine, phenylcyclooctylamine, phenylcyclopentenylamine, phenylcyclohexenylamine, phenylcyclopentadienylamine, *N*-methylanisol, *N*-ethylanizol, *N*-vinylanisol, *N*-allylanizol, *N*-methylethylenediamine, *N,N*'-dimethylethylenediamine, *N*-ethylethylenediamine, *N,N'*-diethylethylenediamine, an *N,N'*-dimethyltolylenediamine, an *N,N'*-diethyltolylenediamine, *N*-methylethylenetriamine, *N,N'*-dimethylethylenetriamine, pyrrole, pyrrolidine, imidazole, piperidine, piperazine, a methylpyrrole, a methylpyrrolidine, a methylimidazole, a methylpiperidine, a methylpiperazine, an ethylpyrrole, an ethylpyrrolidine, an ethylimidazole, an ethylpiperidine, an ethylpiperazine, phthalimide, maleimide, caprolactam, pyrrolidone, morpholine, *N*-methylglycine, *N*-ethylglycine, *N*-methylalanine, N-ethylalanine, N-methylaminothiophene, N-ethylaminothiophene, 2,5-piperazinedione, *N*-methylethanolamine, *N*-ethylethanolamine, or purine.

Examples of the tertiary amines include trimethylamine, triethylamine, a tripropylamine, a tributylamine, a tripentylamine, a trihexylamine, dimethylethylamine, a dimethylpropylamine, a dimethylbutylamine, a dimethylpentylamine, a dimethylhexylamine, a diethylpropylamine, a diethylbutylamine, a diethylpentylamine, a diethylhexylamine, a dipropylbutylamine, a dipropylpentylamine, a dipropylhexylamine, a dibutylpentylamine, a dibutylhexylamine, a dipentylhexylamine, methyldiethylamine, a methyldipropylamine, a methyldibutylamine, a methyldipentylamine, a methyldihexylamine, an ethyldipropylamine, an ethyldibutylamine, an ethyldipentylamine, an ethyldihexylamine, a propyldibutylamine, a propyldipentylamine, a propyldihexylamine, a butyldipentylamine, a butyldihexylamine, a pentyldihexylamine, a methylethylpropylamine, a methylethylbutylamine, a methylethylhexylamine, a methylpropylbutylamine, a methylpropylhexylamine, ethylpropylbutylamine, an ethylbutylpentylamine, an ethylbutylhexylamine, a propylbutylpentylamine, a propylbutylhexylamine, a butylpentylhexylamine, trivinylamine, triallylamine, a tributenylamine, a tripentenylamine, a trihexenylamine, dimethylvinylamine, dimethylallylamine, a dimethylbutenylamine, a dimethylpentenylamine, diethylvinylamine, diethylallylamine, a diethylbutenylamine, a diethylpentenylamine, a diethylhexenylamine, a dipropylvinylamine, a dipropylallylamine, a dipropylbutenylamine, methyldivinylamine, methyldiallylamine, a methyldibutenylamine, ethyldivinylamine, ethyldiallylamine, tricyclopentylamine, tricyclohexylamine, tricyclooctylamine, tricyclopentenylamine, tricyclohexenylamine, tricyclopentadienylamine, a tricyclohexadienylamine, dimethylcyclopentylamine, diethylcyclopentylamine, a dipropylcyclopentylamine,

a dibutylcyclopentylamine, dimethylcyclohexylamine, diethylcyclohexylamine, a dipropylcyclohexylamine, a dimethylcyclopentenylamine, a diethylcyclopentenylamine, a dipropylcyclopentenylamine, a dimethylcyclohexenylamine, a diethylcyclohexenylamine, a dipropylcyclohexenylamine, methyldicyclopentylamine, ethyldicyclopentylamine, a propylcyclopentylamine, methyldicyclohexylamine, ethyldicyclohexylamine, a propylcyclohexylamine, a methyldicyclopentenylamine, an ethyldicyclopentenylamine, a propyldicyclopentenylamine, *N,N*-dimethylaniline, N,N-dimethylbenzylamine, an *N,N*-dimethyltoluidine, an N,N-dimethylnaphthylamine, N,N-diethylaniline, *N,N*-diethylbenzylamine, an *N,N*-diethyltoluidine, an *N,N*-diethylnaphthylamine, an N,N-dipropylaniline, an *N,N*-dipropylbenzylamine, an *N,N*-dipropyltoluidine, an *N,N*-dipropylnaphthylamine, *N,N*-divinylaniline, N,N-diallylaniline, an N,N-divinyltoluidine, *N,N*-diallylaniline, diphenylmethylamine, diphenylethylamine, a diphenylpropylamine, dibenzylmethylamine, dibenzylethylamine, dibenzylcyclohexylamine, dibenzylvinylamine, dibenzylallylamine, a ditolylmethylamine, a ditolylethylamine, a ditolylcyclohexylamine, a ditolylvinylamine, triphenylamine, tribenzylamine, a tri(tolyl)amines, a trinaphthylamine, *N,N,N',N'*-tetramethylethylenediamine, *N,N,N',N'*-tetraethylethylenediamine, an *N,N,N',N'*-tetramethyltolylenediamine, an *N,N,N',N'*-tetraethyltolylenediamine, *N*-methylpyrrole, *N*-methylpyrrolidine, *N*-ethylimidazole, *N,N'*-dimethylpiperazine, *N*-methylpiperidine, *N*-ethylpyrrole, *N*-methylpyrrolidine, *N*-ethylimidazole, *N,N'*-diethylpiperazine, *N*-ethylpiperidine, pyridine, pyridazine, pyrazine, quinoline, quinazoline, quinuclidine, *N*-methylpyrrolidone, *N*-methylmorpholine, *N*-ethylpyrrolidone, *N*-ethylmorpholine, *N,N*-dimethylanisole, *N,N*-diethylanisole, *N,N*-dimethylglycine, *N,N*-diethylglycine, *N,N*-dimethylalanine, *N,N*-diethylalanine, *N,N*-dimethylethanolamine, *N,N*-dimethylaminothiophene, 1,1,3,3-tetramethylguanidine, 1,8-diazabicyclo[5.4.0]undeca-7-ene, 1,5-diazabicyclo[4.3.0]nona-5-ene, 1,4-diazabicyclo[2.2.2]octane and hexamethylenetetramine etc.

Therefore, the above-mentioned amine that can be used as the basic catalyst is preferably a compound in which an aliphatic or alicyclic saturated or unsaturated hydrocarbon group, an aromatic hydrocarbon group, an oxygen-containing and/or sulfur-containing and/or selenium-containing hydrocarbon group, etc. is bonded to one or more nitrogen atoms. From the viewpoint of film strength after thermal crosslinking, the pKaH (acid dissociation constant of conjugated acid) range that is preferable as the amine is preferably 7 or greater, and more preferably 10 or greater.

Among the acidic catalysts and basic catalysts, from the viewpoint of an alcohol exchange reaction in the film progressing promptly, methanesulfonic acid, *p*-toluenesulfonic acid, pyridinium *p*-toluenesulfonate, dodecylbenzenesulfonic acid, phosphoric acid, phosphonic acid, acetic acid, 1,8-diazabicyclo[5.4.0]undec-7-ene, 1,5-diazabicyclo[4.3.0]non-5-ene, and 1,1,3,3-tetramethylguanidine are preferable, and methanesulfonic acid, p-toluenesulfonic acid, phosphoric acid, 1,8-diazabicyclo[5.4.0]undec-7-ene, and 1,5-diazabicyclo[4.3.0]non-5-ene are particularly preferable.

(Comopnent C-2) Metal complex catalyst

In the present invention, (Compnent C-2) the metal complex catalyst that can be used as the alcohol exchange reaction catalyst in the present invention is preferably constituted from a metal element selected from Groups 2A, 3B, 4A, and 5A of the periodic table and an oxo or hydroxy oxygen compound selected from β-diketones, ketoesters, hydroxycarboxylic acids and esters thereof, amino alcohols, and enolic active hydrogen compounds.

Furthermore, among the constituent metal elements, a Group 2A element such as Mg, Ca, Sr, or Ba, a Group 3B element such as Al or Ga, a Group 4A element such as Ti or Zr, and a Group 5A element such as V, Nb, or Ta are preferable, and they form a complex having an excellent catalytic effect. Among them, a complex obtained from Zr, Al, or Ti (ethyl orthotitanate, etc.) is excellent and preferable.

In the present invention, examples of the oxo or hydroxy oxygen-containing compound constituting a ligand of the above-mentioned metal complex include β-diketones such as acetylacetone (2,4-pentanedione) and 2,4-heptanedione, ketoesters such as methyl acetoacetate, ethyl acetoacetate, and butyl acetoacetate, hydroxycarboxylic acids and esters thereof such as lactic acid, methyl lactate, salicylic acid, ethyl salicylate, phenyl salicylate, malic acid, tartaric acid, and methyl tartarate, ketoalcohols such as 4-hydroxy-4-methyl-2-pentanone, 4-hydroxy-2-pentanone, 4-hydroxy-4-methyl-2-pentanone, and 4-hydroxy-2-heptanone, amino alcohols such as monoethanolamine, *N,N*-dimethylethanolamine, *N*-methylmonoethanolamine, diethanolamine, and triethanolamine, enolic active compounds such as methylolmelamine, methylolurea, methylolacrylamide, and diethyl malonate ester, and compounds having a substituent on the methyl group, methylene group, or carbonyl carbon of acetylacetone (2,4-pentanedione).

A preferred ligand is an acetylacetone derivative, and the acetylacetone derivative in the present invention means a compound having a substituent on the methyl group, methylene group, or carbonyl carbon of acetylacetone.

The substituent with which the methyl group of acetylacetone is substituted is a straight-chain or branched alkyl group, acyl group, hydroxyalkyl group, carboxyalkyl group, alkoxy group, or alkoxyalkyl group that all have 1 to 3 carbon atoms, the substituent with which the methylene carbon of acetylacetone is substituted is a carboxy group or a straight-chain or branched carboxyalkyl group or hydroxyalkyl group having 1 to 3 carbon atoms, and the substituent with which the carbonyl carbon of acetylacetone is substituted is an alkyl group having 1 to 3 carbon atoms, and in this case the carbonyl oxygen turns into a hydroxy group by addition of a hydrogen atom.

Specific preferred examples of the acetylacetone derivative include acetylacetone, ethylcarbonylacetone, *n*-propylcarbonylacetone, *i*-propylcarbonylacetone, diacetylacetone, 1-acetyl-1-propionylacetylacetone, hydroxyethylcarbonylacetone, hydroxypropylcarbonylacetone, acetoacetic acid, acetopropionic acid, diacetoacetic acid, 3,3-diacetopropionic acid, 4,4-diacetobutyric acid, carboxyethylcarbonylacetone, carboxypropylcarbonylacetone, and diacetone alcohol, and among them acetylacetone and diacetylacetone are preferable. The complex of the acetylacetone derivative and the metal element is a mononuclear complex in which 1 to 4 molecules of acetylacetone derivative coordinate to one metal element, and when the number of coordinatable sites of the metal element is larger than the total number of coordinatable bond sites of the acetylacetone derivative, a ligand that is usually used in a normal complex, such as a water molecule, a halide ion, a nitro group, or an ammonio group may coordinate thereto.

Preferred examples of the metal complex include a tris(acetylacetonato)aluminum complex salt, a di(acetylacetonato)aluminum-aqua complex salt, a mono(acetylacetonato)aluminum-chloro complex salt, a di(diacetylacetonato)aluminum complex salt, ethyl acetoacetate aluminum diisopropylate, aluminum tris(ethyl acetoacetate), cyclic aluminum oxide isopropylate, a tris(acetylacetonato)barium complex salt, a di(acetylacetonato)titanium complex salt, a tris(acetylacetonato)titanium complex salt, a di-*i*-propoxy-bis(acetylacetonato)titanium complex salt, zirconium tris(ethyl acetoacetate), and a zirconium tris(benzoic acid) complex salt. They are excellent in terms of stability in an aqueous coating solution and an effect in promoting gelling in a sol-gel reaction when thermally drying, and among them ethyl acetoacetate aluminum diisopropylate, aluminum tris(ethyl acetoacetate), a di(acetylacetonato)titanium complex salt, and zirconium tris(ethyl acetoacetate) are particularly preferable.

The resin composition of the present invention may use one type of (Component C) the alcohol exchange reaction catalyst on its own, or may use two or more types in combination.

The content of (Component C) the alcohol exchange reaction catalyst in the resin composition is preferably 0.01 wt% to 20 wt%, and more preferably 0.1 wt% to 10 wt% relative to Component A.

(Component D) Radical polymerization initiator

The resin composition for laser engraving of the present invention comprises (Component D) a radical polymerization initiator. In particular, when (Component B-1) a (meth)acrylate compound is contained as Component B, it is preferable for it to comprise (Component D) a radical polymerization initiator.

With regard to the polymerization initiator, one known to a person skilled in the art may be used without any limitations. Radical polymerization initiators, which are preferred polymerization initiators, are explained in detail below, but the present invention should not be construed as being limited to these descriptions.

The radical polymerization initiator may be a radical photopolymerization initiator or a radical thermopolymerization initiator, and is preferably a radical thermopolymerization initiator.

In the present invention, preferable radical polymerization initiators include (a) aromatic ketones, (b) onium salt compounds, (c) organic peroxides, (d) thio compounds, (e) hexaallylbiimidazole compounds, (f) ketoxime ester compounds, (g) borate compounds, (h) azinium compounds, (i) metallocene compounds, (j) active ester compounds, (k) compounds having a carbon halogen bond, and (l) azo compounds. Hereinafter, although specific examples of the (a) to (l) are cited, the present invention is not limited to these.

In the present invention, when applies to the relief-forming layer of the relief printing plate precursor, from the viewpoint of engraving sensitivity and making a favorable relief edge shape, (c) organic peroxides and (l) azo compounds are more preferable, and (c) organic peroxides are particularly preferable.

The (a) aromatic ketones, (b) onium salt compounds, (d) thio compounds, (e) hexaallylbiimidazole compounds, (f) ketoxime ester compounds, (g) borate compounds, (h) azinium compounds, (i) metallocene compounds, (j) active ester compounds, and (k) compounds having a carbon halogen bonding may preferably include compounds described in paragraphs 0074 to 0118 of JP-A-2008-63554.

Moreover, (c) organic peroxides and (l) azo compounds preferably include the following compounds.

(c) Organic peroxide

Preferred examples of the organic peroxide (c) as a radical polymerization initiator that can be used in the present invention include peroxyester-based ones such as 3,3',4,4'-tetra(tertiary-butylperoxycarbonyl)benzophenone, 3,3',4,4'-tetra(tertiary-amylperoxycarbonyl)benzophenone, 3,3',4,4'-tetra(tertiary-hexylperoxycarbonyl)benzophenone,

3,3',4,4'-tetra(tertiary-octylperoxycarbonyl)benzophenone, 3,3',4,4'-tetra(cumylperoxycarbonyl)benzophenone, 3,3',4,4'-tetra(*p*-isopropylcumylperoxycarbonyl)benzophenone, di-tertiary-butyldiperoxyisophthalate, and di-tertiary-butyldperoxybenzoate.

(I) Azo compounds

Preferable (I) azo compounds as a radical polymerization initiator that can be used in the present invention include those such as 2,2'-azobisisobutyronitrile, 2,2'-azobispropionitrile, 1,1'-azobis(cyclohexane-1-carbonitrile), 2,2'-azobis(2-methylbutyronitrile), 2,2'-azobis(2,4-dimethylvaleronitrile), 2,2'-azobis(4-methoxy-2,4-dimethylvaleronitrile), 4,4'-azobis(4-cyanovaleric acid), dimethyl 2,2'-azobis(isobutyrate), 2,2'-azobis(2-methylpropionamideoxime), 2,2'-azobis[2-(2-imidazolin-2-yl)propane], 2,2'-azobis{2-methyl-*N*-[1,1-bis(hydroxymethyl)-2-hydroxyethyl]propionamide}, 2,2'-azobis[2-methyl-*N*-(2-hydroxyethyl)propionamide], 2,2'-azobis(*N*-butyl-2-methylpropionamide), 2,2'-azobis(*N*-cyclohexyl-2-methylpropionamide), 2,2'-azobis[*N*-(2-propenyl)-2-methyl-propionamide], 2,2'-azobis(2,4,4-trimethylpentane), or 1,8-diazabicyclo[5.4.0]undec-7-ene.

In the present invention, the organic peroxide (c) is particularly preferable as the polymerization initiator in the present invention from the viewpoint of crosslinking properties of the film (relief-forming layer) and improving the engraving sensitivity.

From the viewpoint of the engraving sensitivity, an embodiment obtained by combining (c) an organic peroxide and, Component A and Component B-1 is particularly preferable.

This is presumed as follows. When the relief-forming layer is cured by thermal crosslinking using an organic peroxide, an organic peroxide that did not play a part in radical generation and has not reacted remains, and the remaining organic peroxide works as an autoreactive additive and decomposes exothermally in laser engraving. As the result, energy of generated heat is added to the irradiated laser energy to thus raise the engraving sensitivity.

It will be described in detail in the explanation of photothermal converting agent, the effect thereof is remarkable when carbon black is used as the photothermal converting agent. It is considered that the heat generated from the carbon black is also transmitted to (c) an organic peroxide and, as the result, heat is generated not only from the carbon black but also from the organic peroxide, and that the generation of heat energy to be used for the decomposition of Component A, etc. occurs synergistically.

Component D in the resin composition of the present invention may be used singly or in a combination of two or more types.

The content of Component D in the resin composition of the present invention is preferably 0.1 wt% to 5 wt% relative to the total solids content, more preferably 0.3 wt% to 3 wt%, and particularly preferably 0.5 wt% to 1.5 wt%.

(Component E) Compound which does not contain siloxane bond in molecule and has two or more active hydrogen atoms

When the resin composition for laser engraving of the present invention comprises (Component B-2) the polyfunctional isocyanate compound as Component B, the resin composition for laser engraving of the present invention may comprise (Component E) a compound which does not contain a siloxane bond in the molecule and contains two or more active hydrogen atoms. It is particularly preferable for it to comprise Component E when (Component B-2) the polyfunctional isocyanate compound is contained as Component B, (Component A-3) the acrylic resin is used as Component A, and the acrylic resin has no active hydrogen. In this case, even if (Component A-3) the acrylic resin and (Component B-2) the polyfunctional isocyanate compound do not form crosslinking, a crosslinked structure can be formed from Component B-2 and Component E.

Furthermore, when Component E is added to the resin composition, it is preferable for it to comprise (Component C) the alcohol exchange reaction catalyst from the viewpoint of fully progressing a crosslinking reaction of (Component B-2) the polyfunctional isocyanate with Component E.

From the viewpoint that the progress of the reaction is rapid and a high strength film is obtained, Component E is preferably a compound having one or more functional groups selected from the group consisting of a primary amino group and an acid anhydride group, or a compound having two or more functional groups selected from the group consisting of a secondary amino group, a mercapto group, a carboxyl group, a phenolic hydroxyl group and a hydroxyl group, more preferably a compound having one or more functional groups selected from the group consisting of a primary amino group and an acid anhydride group, or a compound having two or more functional groups selected from the group consisting of a secondary amino group and a mercapto group, and is even more preferably a compound having one or more functional groups selected from the group consisting of a primary amino group and an acid anhydride group.

The compound having at least one primary amino group is not particularly limited, and various types thereof may be used.

Examples thereof include primary alkylamines such as butylamine, octylamine, oleylamine and 2-ethylhexylamine, primary anilines such as aniline, 4-aminoacetophenone, *p*-anisidine, 2-aminoanthracene and 1-naphthylamine,

primary alkanolamines such as monoethanolamine, 2-ethoxyethanolamine and 2-hydroxypropanolamine, aliphatic polyamines such as hexanediamine, ethylenediamine, diethylenetriamine, triethylenetetramine, tetraethylenepentamine, *m*-xylenediamine and *p*-xylenediamine, alicyclic polyamines such as 1,3-diaminocyclohexane and isophoronediamine, polyanilines such as 1,4-phenylenediamine, 2,3-diaminonaphthalene, 2,6-diaminoanthraquinone, 2,2-bis(4-aminophenyl)hexafluoropropane, 4,4'-diaminobenzophenone and 4,4'-diaminodiphenylmethane, Mannich bases consisting of a polycondensate of polyamines, an aldehyde compound, and mono- or polyvalent phenols, and polyamidopolyamines obtained by the reaction of polyamines with polycarboxylic acid or dimer acid.

Among these, because of the suitability for forming a high degree of three dimensional crosslinking, aliphatic polyamines, alicyclic polyamines and polyanilines are preferable, and, in particular, hexanediamine, triethylenetetramine, *m*-xylenediamine and 4,4'-diaminodiphenylmethane are more preferable.

The compound having at least two secondary amino groups is not particularly limited, and various types thereof may be used.

Examples thereof include *N,N'*-dimethylethylenediamine, *N,N'*-diethylethylenediamine, *N,N'*-dibenzylethylenediamine, *N,N'*-diisopropylethylenediamine, 2,5-dimethylpiperazine, N,N'-dimethylcyclohexane-1,2-diamine, piperazine, homopiperazine, 2-methylpiperazine, etc.

The compound having at least one acid anhydride group is not particularly limited, and various types thereof may be used.

Usable examples thereof include acid anhydride compounds such as succinic anhydride, maleic anhydride, phthalic anhydride, hexahydrophthalic anhydride, methylhexahydrophthalic anhydride, nadic anhydride, hydrogenated nadic anhydride, trimellitic anhydride, and pyromellitic anhydride. Among these, the use of methylhexahydrophthalic anhydride is particularly preferable, which gives a cured film that shows a little cure shrinkage and has transparency and high strength.

The compound having at least two mercapto groups is not particularly limited, and various types thereof may be used.

Examples thereof include alkanedithiols such as 1,2-ethanedithiol, 1,3-propanedithiol, 1,4-butanedithiol, 1,5-pentanedithiol, 1,6-hexanedithiol, 1,7-heptanedithiol, 1,8-octanedithiol, 1,9-nonanedithiol, 1,10-decanedithiol, 1,12-dodecanedithiol, 2,2-dimethyl-1,3-propanedithiol, 3-methyl-1,5-pentanedithiol and 2-methyl-1,8-octanedithiol, cycloalkanedithiols such as 1,4-cyclohexanedithiol, alkanedithiols containing a hetero atom in a carbon chain such as bis(2-mercaptoethyl)ether, bis(2-mercaptoethyl)sulfide, bis(2-mercaptoethyl)disulfide and 2,2'-(ethylenedithio)diethanethiol, alkanedithiols containing a hetero atom and an alicyclic structure in a carbon chain such as 2,5-bis(mercaptomethyl)-1,4-dioxane and 2,5-bis(mercaptomethyl)-1,4-dithiane, alkanetrithiols such as 1,1,1-tris(mercaptomethyl)ethane, 2-ether-2-mercaptomethyl-1,3-propanedithiol and 1,8-mercapto-4-mercaptomethyl-3,6-thiaoctane, alkanetetrathiols such as tetrakis(mercaptomethyl)methane, 3,3'-thiobis(propane-1,2-dithiol), 2,2'-thiobis(propane-1,3-dithiol), etc.

The compound having at least two carboxyl groups is not particularly limited, and various types thereof may be used.

Examples thereof include succinic acid, maleic acid, phthalic acid, hexahydrophthalic acid, methylhexahydrophthalic acid, nadic acid, hydrogenated nadic acid, trimellitic acid, pyromellitic acid, adipic acid, sebacic acid, dodecanedicarboxylic acid, isophthalic acid, 2-methylterephthalic acid, naphthalenedicarboxylic acid, etc.

The compound having at least two phenolic hydroxyl groups is not particularly limited, and various types thereof may be used.

Examples thereof include novolac type resins such as phenolnovolac resin, cresolnovolac resin and naphtholnovolac resin; polyfunctional type phenol resins such as triphenolmethane type resin; modified phenol resins such as dicyclopentanediene-modified phenol resin and terpene-modified phenol resin; aralkyl type resins such as phenolaralkyl resin having a phenylene skeleton, phenolaralkyl resin having a biphenylene skeleton, naphtholaralkyl resin having a phenylene skeleton and naphtholaralkyl resin having a biphenylene skeleton; bisphenol compounds such as bisphenol A and bisphenol F; a sulfur atom-contaning type phenol resins such as bisphenol S, etc.

As the compound having at least two hydroxyl groups, various kinds may be used, without particular limitations.

Examples thereof include ethylene glycol, diethylene glycol, propylene glycol, dipropylene glycol, trimethylene glycol, 1,4-tetramethylenediol, 1,3-tetramethylenediol, 2-methyl-1,3-trimethylenediol, 1,5-pentamethylenediol, neopentyl glycol, 1,6-hexamethylenediol, 3-methyl-1,5-pentamethylenediol, 2,4-diethyl-1,5-pentamethylenediol, glycerin, trimethylolpropane, trimethylolethane, cyclohexanediols (such as 1,4-cyclohexanediol), bisphenols (such as bisphenol A), sugar alcohols (such as xylitol and sorbitol), polyalkylene glycols such as polyethylene glycol, polypropylene glycol and polytetramethylene glycol, etc.

The compounds shown below can be cited as specific preferred examples of Component E, but the present invention should not be construed as being thereto.

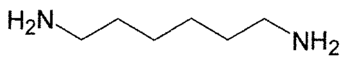
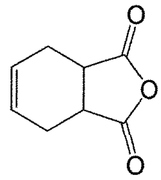
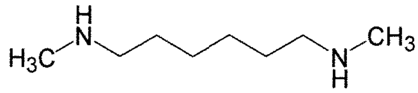
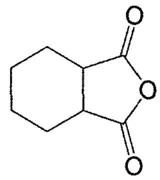
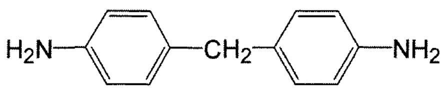
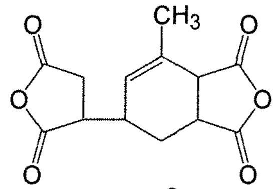
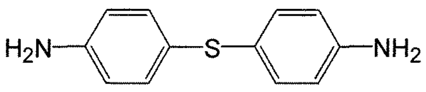
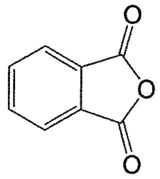
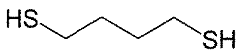
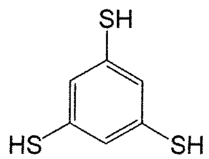
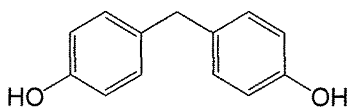
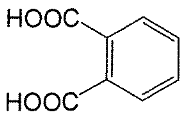
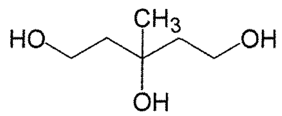
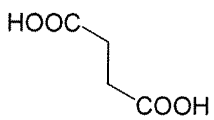
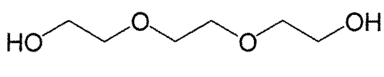

Furthermore, preferred examples of Component E include a diol compound having a carboxyl group such as dimethylol propionic acid or dimethylol butyric acid.

With regard to Component E in the resin composition for laser engraving of the present invention, one type may be used on its own or two or more types may be used in combination.

The content of Component E is preferably 0.01 to 40 wt% relative to the total solids content of the resin composition, more preferably 0.05 to 30 wt%, and yet more preferably 0.1 to 20 wt%.

(Component F) Photothermal conversion agent

The resin composition for laser engraving of the present invention preferably further comprises a photothermal conversion agent. It is surmised that the photothermal conversion agent absorbs laser light and generates heat thus promoting thermal decomposition of a cured material during laser engraving. Because of this, it is preferable to select a photothermal conversion agent that absorbs light having the wavelength of the laser that is used for engraving.

When a laser (a YAG laser, a semiconductor laser, a fiber laser, a surface emitting laser, etc.) emitting infrared

at a wavelength of 700 to 1,300 nm is used as a light source for laser engraving, it is preferable for the relief-forming layer in the present invention to comprise a photothermal conversion agent that can absorb light having a wavelength of 700 to 1,300 nm.

As the photothermal conversion agent in the present invention, various types of dye or pigment are used.

With regard to the photothermal conversion agent, examples of dyes that can be used include commercial dyes and known dyes described in publications such as 'Senryo Binran' (Dye Handbook) (Ed. by The Society of Synthetic Organic Chemistry, Japan, 1970). Specific examples preferably include dyes having a maximum absorption wavelength at 700 to 1,300 nm, such as azo dyes, metal complex salt azo dyes, pyrazolone azo dyes, naphthoquinone dyes, anthraquinone dyes, phthalocyanine dyes, carbonium dyes, diimmonium compounds, quinone imine dyes, methine dyes, cyanine dyes, squarylium colorants, pyrylium salts, and metal thiolate complexes. Examples of dyes that can be preferably used in the present invention include cyanine-based dyes such as heptamethine cyanine dyes, oxonol-based dyes such as pentamethine oxonol dyes, phthalocyanine-based dyes, and dyes described in paragraphs 0124 to 0137 of JP-A-2008-63554.

With regard to the photothermal conversion agent used in the present invention, examples of pigments include commercial pigments and pigments described in the Color Index (C.I.) Handbook, 'Saishin Ganryo Binran' (Latest Pigments Handbook) (Ed. by Nippon Ganryo Gijutsu Kyokai, 1977), 'Saisin Ganryo Ouyogijutsu' (Latest Applications of Pigment Technology) (CMC Publishing, 1986), 'Insatsu Inki Gijutsu' (Printing Ink Technology) (CMC Publishing, 1984). Examples include pigments described in paragraphs 0122 to 0125 of JP-A-2009-178869.

Among these pigments, carbon black is preferable.

Any carbon black, regardless of classification by ASTM and application (e.g. for coloring, for rubber, for dry cell, etc.), may be used as long as dispersibility, etc. in the composition is stable. Carbon black includes for example furnace black, thermal black, channel black, lamp black, and acetylene black. In order to make dispersion easy, a black colorant such as carbon black may be used as color chips or a color paste by dispersing it in nitrocellulose or a binder in advance using, as necessary, a dispersant, and such chips and paste are readily available as commercial products. Examples include carbon blacks described in paragraphs 0130 to 0134 of JP-A-2009-178869.

With regard to Component F in the resin composition of the present invention, one type may be used on its own or two or more types may be used in combination.

The content of the photothermal conversion agent in the resin composition for laser engraving of the present invention largely depends on the size of the molecular extinction coefficient characteristic to the molecule, and is preferably 0.01 to 30 wt% relative to the total weight of the solids content of the resin composition, more preferably 0.05 to 20 wt%, and yet more preferably 0.1 to 10 wt%.

(Component G) Plasticizer

The resin composition for laser engraving of the present invention may comprise (Component G) a plasticizer. In the present invention, due to Component A being contained, the relief layer obtained has excellent flexibility, and no plasticizer need be added.

A plasticizer has the function of softening a film formed from the resin composition for laser engraving, and it is necessary for it to be compatible with a binder polymer.

Preferred examples of the plasticizer include dioctyl phthalate, didodecyl phthalate, bisbutoxyethyl adipate, a polyethylene glycol, a polypropylene glycol (monool type or diol type), and a polypropylene glycol (monool type or diol type).

Among them, bisbutoxyethyl adipate is particularly preferable.

With regard to Component G in the resin composition of the present invention, one type thereof may be used on its own or two or more types may be used in combination.

From the viewpoint of maintaining flexible film physical properties, the content of the plasticizer in the resin composition for laser engraving of the present invention is preferably no greater than 50 wt% of the entire solids content concentration, more preferably no greater than 30 wt%, yet more preferably no greater than 10 wt%, and particularly preferably none.

(Component H) Solvent

It is preferably to use (Component H) a solvent when preparing the resin composition for laser engraving of the present invention.

As the solvent, an organic solvent is preferably used.

Specific preferred examples of the aprotic organic solvent include acetonitrile, tetrahydrofuran, dioxane, toluene, propylene glycol monomethyl ether acetate, methyl ethyl ketone, acetone, methyl isobutyl ketone, ethyl acetate, butyl acetate, ethyl lactate, *N,N*-dimethylacetamide, N-methylpyrrolidone, and dimethyl sulfoxide.

Specific preferred examples of the protic organic solvent include methanol, ethanol, 1-propanol, 2-propanol, 1-butanol, 1-methoxy-2-propanol, ethylene glycol, diethylene glycol, and 1,3-propanediol.
Among these, propylene glycol monomethyl ether acetate is particularly preferable.

<Other additives>

The resin composition for laser engraving of the present invention may comprise as appropriate various types of known additives as long as the effects of the present invention are not inhibited. Examples include a filler, a wax, a process oil, an a metal oxide, an antiozonant, an anti-aging agent, a polymerization inhibitor, and a colorant, and one type thereof may be used on its own or two more types may be used in combination.

(Relief printing plate precursor for laser engraving)

A first embodiment of the relief printing plate precursor for laser engraving of the present invention comprises a relief-forming layer formed from the resin composition for laser engraving of the present invention.
A second embodiment of the relief printing plate precursor for laser engraving of the present invention comprises a crosslinked relief-forming layer formed by crosslinking a relief-forming layer formed from the resin composition for laser engraving of the present invention.
In the present invention, the 'relief printing plate precursor for laser engraving' means both or one of a plate having a crosslinkable relief-forming layer formed from the resin composition for laser engraving in a state before being crosslinked and a plate in a state in which it is cured by light and/or heat.
The relief printing plate precursor for laser engraving of the present invention preferably comprises a crosslinked relief-forming layer which is crosslinked by heat.
In the present invention, the 'relief-forming layer' means a layer in a state before being crosslinked, that is, a layer formed from the resin composition for laser engraving of the present invention, which may be dried as necessary.
In the present invention, the 'crosslinked relief-forming layer' means a layer formed by crosslinking the relief-forming layer. The crosslinking is preferably carried out by means of heat and/or light. Furthermore, the crosslinking is not particularly limited as long as it is a reaction by which the resin composition is cured, and it is a concept that includes a structure crosslinked due to reactions between Component A's, but a crosslinked structure may be formed by a reaction between Component A and other Component. When polymerizable compound is used, the crossliking includes a closslinking by polymerization.
The 'relief printing plate' is prepared by laser engraving a printing plate precursor having a crosslinked relief-forming layer.
Moreover, in the present invention, the 'relief layer' means a layer of the relief printing plate formed by engraving using a laser, that is, the crosslinked relief-forming layer after laser engraving.
A relief printing plate precursor for laser engraving of the present invention comprises a relief-forming layer formed from the resin composition for laser engraving, which has the above-mentioned components. The (crosslinked) relief-forming layer is preferably provided above a support.
The relief printing plate precursor for laser engraving may further comprise, as necessary, an adhesive layer between the support and the (crosslinked) relief-forming layer and, above the (crosslinked) relief-forming layer, a slip coat layer and a protection film.

<Relief-forming layer>

The relief-forming layer is a layer formed from the resin composition for laser engraving of the present invention, and is crosslinkable.
As a mode in which a relief printing plate is prepared using the relief printing plate precursor for laser engraving, a mode in which a relief printing plate is prepared by crosslinking a relief-forming layer to thus form a relief printing plate precursor having a crosslinked relief-forming layer, and the crosslinked relief-forming layer (hard relief-forming layer) is then laser-engraved to thus form a relief layer is preferable. By crosslinking the relief-forming layer, it is possible to prevent abrasion of the relief layer during printing, and it is possible to obtain a relief printing plate having a relief layer with a sharp shape after laser engraving.
The relief-forming layer may be formed by molding the resin composition for laser engraving that has the above-mentioned components for a relief-forming layer into a sheet shape or a sleeve shape. The relief-forming layer is usually provided above a support, which is described later, but it may be formed directly on the surface of a member such as a cylinder of equipment for plate producing or printing or may be placed and immobilized thereon, and a support is not always required.
A case in which the relief-forming layer is mainly formed in a sheet shape is explained as an Example below.

<Support>

A material used for the support of the relief printing plate precursor for laser engraving is not particularly limited, but one having high dimensional stability is preferably used, and examples thereof include metals such as steel, stainless steel, or aluminum, plastic resins such as a polyester (e.g. polyethylene terephthalate (PET), polybutylene terephthalate (PBT), or polyacrylonitrile (PAN)) or polyvinyl chloride, synthetic rubbers such as styrenebutadiene rubber, and glass fiber-reinforced plastic resins (epoxy resin, phenolic resin, etc.). As the support, a PET film or a steel substrate is preferably used. The configuration of the support depends on whether the relief-forming layer is in a sheet shape or a sleeve shape.

<Adhesive layer>

When the relief-froming layer is formed above a support, an adhesive layer may be provided between the two layers for the purpose of strengthening the adhesion between the two layers.
Examples of materials (adhesives) that can be used in the adhesive layer include those described in 'Handbook of Adhesives', Second Edition, Ed by I. Skeist, (1977).

<Protection film, slip coat layer>

For the purpose of preventing scratches or dents in the relief-forming layer surface or the crosslinked relief-forming layer surface, a protection film may be provided on the relief-forming layer surface or the crosslinked relief-forming layer surface. The thickness of the protection film is preferably 25 to 500 μm, and more preferably 50 to 200 μm. The protection film may employ, for example, a polyester-based film such as PET or a polyolefin-based film such as PE (polyethylene) or PP (polypropylene). The surface of the film may be made matte. The protection film is preferably peelable.
When the protection film is not peelable or conversely has poor adhesion to the relief-forming layer, a slip coat layer may be provided between the two layers. The material used in the slip coat layer preferably employs as a main component a resin that is soluble or dispersible in water and has little tackiness, such as polyvinyl alcohol, polyvinyl acetate, partially saponified polyvinyl alcohol, a hydroxyalkylcellulose, an alkylcellulose, or a polyamide resin.

(Process for producing relief printing plate precursor for laser engraving)

Formation of a relief-forming layer in the relief printing plate precursor for laser engraving is not particularly limited, and examples thereof include a method in which the resin composition for laser engraving is prepared, solvent is removed as necessary from this coating liquid composition for laser engraving, and it is melt-extruded onto a support. Alternatively, a method may be employed in which the resin composition for laser engraving is cast onto a support, and this is dried in an oven to thus remove solvent from the resin composition.
Among them, the process for making a relief printing plate for laser engraving of the present invention is preferably a production process comprising a layer formation step of forming a relief-forming layer from the resin composition for laser engraving of the present invention and a crosslinking step of crosslinking the relief-forming layer by means of heat and/or light to thus obtain a relief printing plate precursor having a crosslinked relief-forming layer, and more preferably a production process comprising a layer formation step of forming a relief-forming layer from the resin composition for laser engraving of the present invention and a crosslinkig step of crosslinking the relief-forming layer by means of heat to thus obtain a relief printing plate precursor having a crosslinked relief-forming layer.
Subsequently, as necessary, a protection film may be laminated on the relief-forming layer. Laminating may be carried out by compression-bonding the protection film and the relief-forming layer by means of heated calendar rollers, etc. or putting a protection film into intimate contact with a relief-forming layer whose surface is impregnated with a small amount of solvent.
When a protection film is used, a method in which a relief-forming layer is first layered on a protection film and a support is then laminated may be employed.
When an adhesive layer is provided, it may be dealt with by use of a support coated with an adhesive layer. When a slip coat layer is provided, it may be dealt with by use of a protection film coated with a slip coat layer.

<Layer formation step>

The process for making the relief printing plate for laser engraving of the present invention preferably comprises a layer formation step of forming a relief-forming layer from the resin composition for laser engraving of the present invention.

Preferred examples of a method for forming a relief-forming layer include a method in which the resin composition for laser engraving of the present invention is prepared, solvent is removed as necessary from this resin composition for laser engraving, and it is then melt-extruded onto a support and a method in which the resin composition for laser engraving of the present invention is prepared, the resin composition for laser engraving of the present invention is cast onto a support, and this is dried in an oven to thus remove the solvent.
The resin composition for laser engraving may be produced by, for example, dissolving Component A and Component B, and optional components in an appropriate solvent, and then dissolving Component C to Component E and Component F.
The thickness of the (crosslinked) relief-forming layer in the relief printing plate precursor for laser engraving before and after crosslinking is preferably at least 0.05 mm but no greater than 10 mm, more preferably at least 0.05 mm but no greater than 7 mm, and yet more preferably at least 0.05 mm but no greater than 3 mm.

<Crosslinking step>

The process for producing a relief printing plate precursor for laser engraving of the present invention is preferably a production process comprising a crosslinking step of crosslinking the relief-forming layer by means of light and/or heat to thus obtain a relief printing plate precursor having a crosslinked relief-forming layer.
When the relief-forming layer comprises a photopolymerization initiator, the relief-forming layer may be crosslinked by irradiating the relief-forming layer with actinic radiation that triggers the photopolymerization initiator.
It is preferable to apply light to the entire surface of the relief-forming layer. Examples of the light (also called 'actinic radiation') include visible light, UV light, and an electron beam, but UV light is most preferably used. When the side where there is a substrate, such as a relief-forming layer support, for fixing the relief-forming layer, is defined as the reverse face, only the front face need be irradiated with light, but when the support is a transparent film through which actinic radiation passes, it is preferable to further irradiate the reverse face with light as well. When a protection film is present, irradiation from the front face may be carried out with the protection film as it is or after peeling off the protection film. Since there is a possibility of polymerization being inhibited in the presence of oxygen, irradiation with actinic radiation may be carried out after superimposing a polyvinyl chloride sheet on the relief-forming layer and evacuating.
When the relief-forming layer comprises a thermopolymerization initiator (it being possible for the above-mentioned photopolymerization initiator to function also as a thermopolymerization initiator), the relief-forming layer may be crosslinked by heating the relief printing plate precursor for laser engraving (step of crosslinking by means of heat). As heating means, there can be cited a method in which a printing plate precursor is heated in a hot air oven or a far-infrared oven for a predetermined period of time and a method in which it is put into contact with a heated roller for a predetermined period of time.
As a method for crosslinking the relief-forming layer, from the viewpoint of the relief-forming layer being uniformly curable (crosslinkable) from the surface into the interior, crosslinking by heat is preferable.
Due to the relief-forming layer being crosslinked, firstly, a relief formed after laser engraving becomes sharp and, secondly, tackiness of engraving residue formed when laser engraving is suppressed. If an uncrosslinked relief-forming layer is laser-engraved, residual heat transmitted to an area around a laser-irradiated part easily causes melting or deformation of a part that is not targeted, and a sharp relief layer cannot be obtained in some cases. Furthermore, in terms of the general properties of a material, the lower the molecular weight, the more easily it becomes a liquid rather than a solid, that is, there is a tendency for tackiness to be stronger. Engraving residue formed when engraving a relief-forming layer tends to have higher tackiness the more that low-molecular-weight materials are used. Since a polymerizable compound, which is a low-molecular-weight material, becomes a polymer by crosslinking, the tackiness of the engraving residue formed tends to decrease.
When the crosslinking step is a step of carrying out crosslinking by light, although equipment for applying actinic radiation is relatively expensive, since a printing plate precursor does not reach a high temperature, there are hardly any restrictions on starting materials for the printing plate precursor.
When the crosslinking step is a step of carrying out crosslinking by heat, although there is the advantage that particularly expensive equipment is not needed, since a printing plate precursor reaches a high temperature, it is necessary to carefully select the starting materials used while taking into consideration the possibility that a thermoplastic polymer, which becomes soft at high temperature, will deform during heating, etc.
During thermal crosslinking, it is preferable to add a thermopolymerization initiator. As the thermopolymerization initiator, a commercial thermopolymerization initiator for free radical polymerization may be used. Examples of such a thermopolymerization initiator include an appropriate peroxide, hydroperoxide, and azo group-containing compound. A representative vulcanizing agent may also be used for crosslinking. Thermal crosslinking may also be carried out by adding a heat-curable resin such as for example an epoxy resin as a crosslinking component to a layer.

(Relief printing plate and process for making same)

The process for making a relief printing plate of the present invention preferably comprises a layer formation step of forming a relief-forming layer from the resin composition for laser engraving of the present invention, a crosslinking step of crosslinking the relief-forming layer by means of heat and/or light to thus obtain a relief printing plate precursor having a crosslinked relief-forming layer, and an engraving step of laser-engraving the relief printing plate precursor having the crosslinked relief-forming layer, and more preferably comprises a layer formation step of forming a relief-forming layer from the resin composition for laser engraving of the present invention, a crosslinking step of crosslinking the relief-forming layer by means of heat to thus obtain a relief printing plate precursor having a crosslinked relief-forming layer, and an engraving step of laser-engraving the relief printing plate precursor having the crosslinked relief-forming layer.

The relief printing plate of the present invention is a relief printing plate having a relief layer obtained by crosslinking and laser-engraving a layer formed from the resin composition for laser engraving of the present invention, and is preferably a relief printing plate made by the process for making a relief printing plate of the present invention.

The relief printing plate of the present invention is preferably used when printing an aqueous ink.

The layer formation step and the crosslinking step in the process for making a relief printing plate of the present invention mean the same as the layer formation step and the crosslinking step in the above-mentioned process for producing a relief printing plate precursor for laser engraving, and preferred ranges are also the same.

<Engraving step>

The process for making a relief printing plate of the present invention preferably comprises an engraving step of laser-engraving the relief printing plate precursor having a crosslinked relief-forming layer.

The engraving step is a step of laser-engraving a crosslinked relief-forming layer that has been crosslinked in the crosslinking step to thus form a relief layer. Specifically, it is preferable to engrave a crosslinked relief-forming layer that has been crosslinked by irradiation with laser light according to a desired image, thus forming a relief layer. Furthermore, a step in which a crosslinked relief-forming layer is subjected to scanning irradiation by controlling a laser head using a computer in accordance with digital data of a desired image can preferably be cited.

This engraving step preferably employs an infrared laser. When irradiated with an infrared laser, molecules in the crosslinked relief-forming layer undergo molecular vibration, thus generating heat. When a high power laser such as a carbon dioxide laser or a YAG laser is used as the infrared laser, a large quantity of heat is generated in the laser-irradiated area, and molecules in the crosslinked relief-forming layer undergo molecular scission or ionization, thus being selectively removed, that is, engraved. The advantage of laser engraving is that, since the depth of engraving can be set freely, it is possible to control the structure three-dimensionally. For example, for an area where fine halftone dots are printed, carrying out engraving shallowly or with a shoulder prevents the relief from collapsing due to printing pressure, and for a groove area where a fine outline character is printed, carrying out engraving deeply makes it difficult for the groove to be blocked with ink, thus enabling breakup of an outline character to be suppressed.

In particular, when engraving is carried out using an infrared laser that corresponds to the absorption wavelength of the photothermal conversion agent, it becomes possible to selectively remove the crosslinked relief-forming layer at higher sensitivity, thus giving a relief layer having a sharp image.

As the infrared laser used in the engraving step, from the viewpoint of productivity, cost, etc., a carbon dioxide laser (a $CO_2$ laser) or a semiconductor laser is preferable. In particular, a fiber-coupled semiconductor infrared laser (FC-LD) is preferably used. In general, compared with a $CO_2$ laser, a semiconductor laser has higher efficiency laser oscillation, is less expensive, and can be made smaller. Furthermore, it is easy to form an array due to the small size. Moreover, the shape of the beam can be controlled by treatment of the fiber.

With regard to the semiconductor laser, one having a wavelength of 700 to 1,300 nm is preferable, one having a wavelength of 800 to 1,200 nm is more preferable, one having a wavelength of 860 to 1,200 nm is futher preferable, and one having a wavelength of 900 to 1,100 nm is particularly preferable.

Furthermore, the fiber-coupled semiconductor laser can output laser light efficiently by being equipped with optical fiber, and this is effective in the engraving step in the present invention. Moreover, the shape of the beam can be controlled by treatment of the fiber. For example, the beam profile may be a top hat shape, and energy can be applied stably to the plate face. Details of semiconductor lasers are described in 'Laser Handbook 2nd Edition' The Laser Society of Japan, and 'Applied Laser Technology' The Institute of Electronics and Communication Engineers, etc.

Moreover, as plate making equipment comprising a fiber-coupled semiconductor laser that can be used suitably in the process for making a relief printing plate employing the relief printing plate precursor of the present invention, those described in detail in JP-A-2009-172658 and JP-A-2009-214334 can be cited, this can be used for making a relief printing plate in the present invention.

The process for making a relief printing plate of the present invention may as necessary further comprise,

subsequent to the engraving step, a rinsing step, a drying step, and/or a post-crosslinking step, which are shown below.

Rinsing step: a step of rinsing the engraved surface by rinsing the engraved relief layer surface with water or a liquid containing water as a main component.

Drying step: a step of drying the engraved relief layer.

Post-crosslinking step: a step of further crosslinking the relief layer by applying energy to the engraved relief layer.

After the above-mentioned step, since engraving residue is attached to the engraved surface, a rinsing step of washing off engraving residue by rinsing the engraved surface with water or a liquid containing water as a main component may be added. Examples of rinsing means include a method in which washing is carried out with tap water, a method in which high pressure water is spray-jetted, and a method in which the engraved surface is brushed in the presence of mainly water using a batch or conveyor brush type washout machine known as a photosensitive resin relief printing plate precursor, and when slime due to engraving residue cannot be eliminated, a rinsing liquid to which a soap or a surfactant is added may be used.

When the rinsing step of rinsing the engraved surface is carried out, it is preferable to add a drying step of drying an engraved relief-forming layer so as to evaporate rinsing liquid.

Furthermore, as necessary, a post-crosslinking step for further crosslinking the relief-forming layer may be added. By carrying out a post-crosslinking step, which is an additional crosslinking step, it is possible to further strengthen the relief formed by engraving.

The pH of the rinsing liquid that can be used in the present invention is preferably at least 9, more preferably at least 10, and yet more preferably at least 11. The pH of the rinsing liquid is preferably no greater than 14, more preferably no greater than 13.5, yet more preferably no greater than 13.1. When in the above-mentioned range, handling is easy.

In order to set the pH of the rinsing liquid in the above-mentioned range, the pH may be adjusted using an acid and/or a base as appropriate, and the acid or base used is not particularly limited.

The rinsing liquid that can be used in the present invention preferably comprises water as a main component.

The rinsing liquid may contain as a solvent other than water a water-miscible solvent such as an alcohol, acetone, or tetrahydrofuran.

The rinsing liquid preferably comprises a surfactant.

From the viewpoint of removability of engraving residue and little influence on a relief printing plate, preferred examples of the surfactant that can be used in the present invention include betaine compounds (amphoteric surfactants) such as a carboxybetaine compound, a sulfobetaine compound, a phosphobetaine compound, an amine oxide compound, and a phosphine oxide compound.

Furthermore, examples of the surfactant also include known anionic surfactants, cationic surfactants, amphoteric surfactants, and nonionic surfactants. Moreover, a fluorine-based or silicone-based nonionic surfactant may also be used in the same manner.

With regard to the surfactant, one type may be used on its own or two or more types may be used in combination.

It is not necessary to particularly limit the amount of surfactant used, but it is preferably 0.01 to 20 wt% relative to the total weight of the rinsing liquid, and more preferably 0.05 to 10 wt%.

The relief printing plate having a relief layer on the surface of any substrate such as a surpport etc. may be produced as described above.

From the viewpoint of satisfying suitability for various aspects of printing, such as abrasion resistance and ink transfer properties, the thickness of the relief layer of the relief printing plate is preferably at least 0.05 mm but no greater than 10 mm, more preferably at least 0.05 mm but no greater than 7 mm, and yet more preferably at least 0.05 mm but no greater than 3 mm.

Furthermore, the Shore A hardness of the relief layer of the relief printing plate is preferably at least 50° but no greater than 90°. When the Shore A hardness of the relief layer is at least 50°, even if fine halftone dots formed by engraving receive a strong printing pressure from a letterpress printer, they do not collapse and close up, and normal printing can be carried out. Furthermore, when the Shore A hardness of the relief layer is no greater than 90°, even for flexographic printing with kiss touch printing pressure it is possible to prevent patchy printing in a solid printed part.

The Shore A hardness in the present specification is a value measured by a durometer (a spring type rubber hardness meter) that presses an indenter (called a pressing needle or indenter) into the surface of a measurement target so as to deform it, measures the amount of deformation (indentation depth), and converts it into a numerical value.

The relief printing plate of the present invention is particularly suitable for printing by a flexographic printer using an aqueous ink, but printing is also possible when it is carried out by a relief printer using any of aqueous, oilbased, and UV inks, and printing is also possible when it is carried out by a flexographic printer using a UV ink. Since the relief printing plate of the present invention has excellent rinsing properties, there is no engraving residue, and a relief layer obtained has excellent elasticity, aqueous ink transfer properties and printing durability are excellent, and printing can be carried out for a long period of time without plastic deformation of the relief layer or degradation of printing durability.

EXAMPLE

The present invention is explained in further detail below by reference to Examples and Comparative Examples, but the present invention should not be construed as being limited to these Examples. Furthermore, 'parts' in the description below means 'parts by weight', and '%' means 'wt%', unless otherwise specified.
Moreover, the number-average molecular weight (Mn) of a polymer in the Examples are values measured by a GPC method unless otherwise specified.
Plastomer synthesis is explained below.

<Synthesis of acrylic resin (P-1)>

A three-necked flask equipped with a stirring blade and a condenser was charged with 39 parts of 2-hydroxyethyl methacrylate (Wako Pure Chemical Industries, Ltd.), 170 parts of dodecyl methacrylate (Tokyo Chemical Industry Co., Ltd.), and 400 parts of PMA (propylene glycol monomethyl ether acetate, Sankyo Chemical Co., Ltd.) and stirred at 85°C for 20 min. Subsequently, 3 parts of V-601 (dimethyl-2,2'-azobis(2-methyl propionate), Wako Pure Chemical Industries, Ltd.) was added, and stirring and heating were carried out at 85°C for 4 hours. Subsequently, a further 2 parts of V-601 was added, and stirring was carried out at 95°C for 2 hours.
An acrylic resin (P-1) obtained by removing PMA, which was the solvent, from the synthesized polymer solution was a liquid at room temperature. Mn (GPC) was 11,000.

<Synthesis of polyester resin (P-2)>

A mixture in which propylene glycol, diethylene glycol, adipic acid, succinic acid, and isophthalic acid were mixed at a molar ratio of 0.13:0.39:0.24:0.14:0.12 so that the diol component was slightly in excess in order to introduce an OH group at a main chain terminal of a synthesized polymer was heated under an atmosphere of nitrogen and subjected to a water condensation reaction, in which the degree of vacuum of the system was increased using a vacuum pump so as to remove water from the system, thus giving a liquid polyester resin (P-2). The polyester resin (P-2) thus obtained was a liquid at room temperature. Mn (GPC) was 15,000.

<Synthesis of polyurethane resin (P-3)>

A separable flask equipped with a thermometer, a stirrer, and a reflux condenser was charged with Kuraray Polyol C-2050 (carbonate polyol, Kuraray Co., Ltd.) and tolylene diisocyanate at a molar ratio of 1:1, and a reaction was carried out at 60°C for about 3 hours while heating. A polyurethane resin (P-3) having an Mn (GPC) of 20,000 was obtained. This resin was liquid at 20°C.

[Example 1]

1. Preparation of resin composition for laser engraving

A three-necked flask equipped with a stirring blade and a condenser was charged with 50 parts of 'Kuraray Polyol C-2050' (Kuraray Co., Ltd.) as a plastomer (Component A) and 47 parts of propylene glycol monomethyl ether acetate as a solvent, and heated at 70°C for 120 min while stirring to thus dissolve the polymer. Subsequently, the solution was cooled to 40°C, 25 parts of Blemmer PDE-200 (NOF Corporation) as a crosslinking agent (Component B), 0.5 parts of *t*-butylperoxybenzoate (product name: Perbutyl Z, NOF Corporation) as a polymerization initiator, and 1 part of Ketjen Black EC600JD (carbon black, Lion Corporation) as a photothermal conversion agent were further added, and stirring was carried out for 30 min. By these operations, coating solution 1 for a flowable crosslinkable relief-forming layer (resin composition 1 for laser engraving) was obtained.

2. Preparation of relief printing plate precursor for laser engraving

A spacer (frame) having a predetermined thickness was placed on a PET substrate, coating solution 1 for a crosslinkable relief-forming layer obtained above was gently cast so that it did not overflow from the spacer (frame), and drying was carried out in an oven at 70°C for 3 hours. Subsequently, heating was carried out at 80°C for 3 hours and further at 100°C for 3 hours to thus thermally crosslink the relief-forming layer, thereby providing a relief-forming layer having a thickness of about 1 mm and preparing relief printing plate precursor 1 for laser engraving.

3. Making relief printing plate

The relief-forming layer after crosslinking (crosslinked relief-forming layer) was engraved using the two types of laser below.

As a carbon dioxide laser engraving machine, for engraving by irradiation with a laser, an ML-9100 series high quality $CO_2$ laser marker (Keyence) was used. With regard to a printing plate precursor for laser engraving, a 1 cm square solid printed part was raster-engraved using the carbon dioxide laser engraving machine under conditions of an output of 12 W, a head speed of 200 mm/sec, and a pitch setting of 2,400 DPI.

As a semiconductor laser engraving machine, laser recording equipment provided with an SDL-6390 fiber-coupled semiconductor laser (FC-LD) (JDSU, wavelength 915 nm) with a maximum power of 8.0 W was used. A 1 cm square solid printed part was raster-engraved using the semiconductor laser engraving machine under conditions of a laser output of 7.5 W, a head speed of 409 mm/sec, and a pitch setting of 2,400 DPI.

The thickness of the relief layer of the relief printing plate was about 1 mm.

[Examples 2 to 12 and Comparative Examples 1 and 2]

1. Preparation of crosslinkable resin compositions for laser engraving

Coating solutions 2 to 12 for a crosslinkable relief-forming layer (crosslinkable resin compositions for laser engraving) and comparative coating solutions 1 and 2 for a crosslinkable relief-forming layer (resin compositions for laser engraving) were prepared in the same manner as in Example 1 except that the plastomer (A), the crosslinking agent (B), and the additives used in Example 1 were changed to the plastomer (A), crosslinking agent (B), and additives described in Table 1 below.

Details of the plastomer (Component A), the crosslinking agent (Component B), and the additives used in each of the Examples and Comparative Examples are as follows.

(Component A)

Kuraray Polyol C-2050: polycarbonate polyol, oil at 20°C, Kuraray Co., Ltd.
KF-6003: both termini carbinol-modified silicone oil (polysiloxanediol), oil at 20°C, Shin-Etsu Chemical Co., Ltd.
Acrylic resin (P-1): see acrylic resin (P-1) Synthetic Example above
Polyester resin (P-2): see polyester resin (P-2) Synthetic Example above
Polyurethane resin (P-3): see polyurethane resin (P-3) Synthetic Example above
GI-3000: hydrogenated polybutadienediol, number-average molecular weight 3,000, liquid at 20°C, Nippon Soda Co., Ltd.

(Comparative Examples)

S-LEC BM-2: polyvinyl butyral, Tg 67°C, Sekisui Chemical Co., Ltd.
TR2000: styrene/butadiene block copolymer, thermoplastic elastomer, JSR
G-3000: polybutadienediol (containing ethylenically unsaturated group), number-average molecular weight 3,000, liquid at 20°C, Nippon Soda Co., Ltd.

(Component B)

Blemmer PDE-200: polyethylene glycol dimethacrylate ((meth)acrylate compound), NOF Corporation
Duranate TKA-100: hexamethylene diisocyanate non-yellowing polyisocyanate (polyfunctional isocyanate compound), Asahi Kasei Chemicals Corporation Compound S-32 (silane coupling agent): formula below

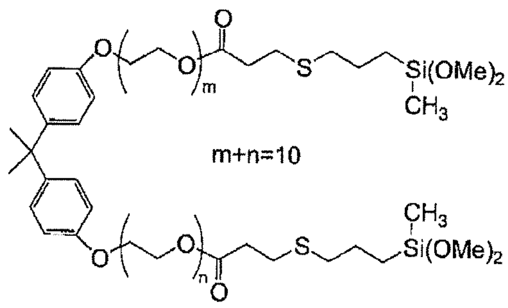

(Additives)

Perbutyl Z: polymerization initiator, *t*-butylperoxybenzoate, NOF Corporation
Neostann U-600: bismuth-based catalyst, Nitto Chemical Industry Co., Ltd.
DBU: 1,8-diazabicyclo-[5,4,0]-undec-7-ene

2. Preparation of relief printing plate precursor for laser engraving

Relief printing plate precursors 2 to 12 for laser engraving of Examples and relief printing plate precursors 1 and 2 for laser engraving of Comparative Examples were obtained in the same manner as in Example 1 except that coating solution 1 for a crosslinkable relief-forming layer in Example 1 was changed accordingly to coating solutions 2 to 12 for a crosslinkable relief-forming layer and comparative coating solutions 1 and 2 for a crosslinkable relief-forming layer.

3. Making of relief printing plate

Relief printing plates 2 to 12 of Examples and relief printing plates 1 and 2 of Comparative Examples were obtained in the same manner as in Example 1 by engraving a relief layer after thermally crosslinking the relief-forming layer of the relief printing plate precursors 2 to 12 for laser engraving of the Examples and the relief printing plate precursors 1 and 2 for laser engraving of the Comparative Examples.
The thickness of the relief layers of these relief printing plates was about 1 mm.

4. Evaluation of relief printing plate

The performances of a relief printing plate were evaluated in terms of the items below, and the results are shown in Table 1. The evaluation results when carrying out engraving using a carbon dioxide laser and the evaluation results when carrying out engraving using a semiconductor laser were the same.

(4-1) Rinsing properties

A laser-engraved plate was immersed in water and an engraved part was rubbed with a toothbrush (Clinica Toothbrush Flat, Lion Corporation) 10 times. Subsequently, the presence/absence of residue on the surface of the relief layer was ascertained with an optical microscope. When there was no residue the evaluation was A, when there was almost no residue the evaluation was B, when there was a little residue the evaluation was C, when there was some residue but there was no practical problem the evaluation was D, and when the residue could not be removed the evaluation was E.

(4-2) Ink transfer properties

A relief printing plate that had been obtained was set in a printer (ITM-4 type, Iyo Kikai Seisakujo Co., Ltd.), printing was continued using the aqueous ink Aqua SPZ16 rouge (Toyo Ink Mfg. Co., Ltd.) as an ink without dilution and Full Color Form M 70 (Nippon Paper Industries Co., Ltd., thickness 100 μm) as printing paper, and the degree of ink attachment of a solid printed part on the printed material at 1,000 m from the start of printing was compared by visual inspection.
The evaluation criteria were: A when it was uniform without uneven density, C when there was unevenness,

and B when there was slight unevenness but there was no problem in practice.

Table 1

| | (Component A) plastomer | (Component B) crosslinking agent | Additive | Rinsing properties | Ink transfer properties |
|---|---|---|---|---|---|
| Ex. 1 | Kuraray Polyol C-2050 | Blemmer PDE-200 | Perbutyl Z | B | A |
| Ex. 2 | KF-6003 | Blemmer PDE-200 | Perbutyl Z | B | A |
| Ex. 3 | Acrylic resin (P-1) | Blemmer PDE-200 | Perbutyl Z | B | A |
| Ex. 4 | Polyester resin (P-2) | Blemmer PDE-200 | Perbutyl Z | B | A |
| Ex. 5 | Polyurethane resin (P-3) | Blemmer PDE-200 | Perbutyl Z | B | A |
| Ex. 6 | Acrylic resin (P-1) | Duranate TKA-100 | Neostann U-600 | B | A |
| Ex. 7 | Polyester resin (P-2) | Duranate TKA-100 | Neostann U-600 | B | A |
| Ex. 8 | Polyurethane resin (P-3) | Duranate TKA-100 | Neostann U-600 | B | A |
| Ex. 9 | KF-6003 | S-32 | DBU | A | A |
| Ex. 10 | Acrylic resin (P-1) | S-32 | DBU | A | A |
| Ex. 11 | Polyester resin (P-2) | S-32 | DBU | A | A |
| Ex. 12 | Polyurethane resin (P-3) | S-32 | DBU | A | A |
| Comp. Ex. 1 | S-LEC BM-2 | Blemmer PDE-200 | Perbutyl Z | D | C |
| Comp. Ex. 2 | TR2000 | Blemmer PDE-200 | Perbutyl Z | E | B |

<Example 13 and Comparative Example 3>

In Example 13, a relief printing plate precursor was produced in the same manner as in Example 1 except that Component A was changed to GI-3000 (hydrogenated polybutadienediol, number-average molecular weight 3,000, liquid at 20°C, Nippon Soda Co., Ltd.). In Comparative Example 3, a relief printing plate precursor was produced in the same manner as in Example 1 except that Component A was changed to G-3000 (polybutadienediol (containing ethylenically unsaturated group), number-average molecular weight 3,000, liquid at 20°C, Nippon Soda Co., Ltd.).

The flexibility of a crosslinked relief-forming layer (relief layer) was evaluated using the relief printing plate precursor so produced.

The crosslinked relief-forming layer alone was peeled off from the relief printing plate precursor having the crosslinked relief-forming layer and used as a sample, and Young's modulus and elongation at break were measured at room temperature (20°C). The test conditions were as follows. The results are shown in Table 2 below.

<Test conditions>

Tensile tester: Shimadzu Corporation, AGSH5000
Analysis software: Shimadzu Corporation, TRAPEZIUM
Tensile speed: 20 mm/min
Sample shape: dumbbell

Table 2

| | Young's modulus | Elongation at break |
|---|---|---|
| Ex. 13 | 0.9MPa | 250% |
| Comp. Ex. 3 | 1.1MPa | 180% |

It was confirmed that Example 13, in which Component A had no ethylenically unsaturated group, had better flexibility for the crosslinked relief-forming layer and the relief layer.

## Claims

**1.** A resin composition for laser engraving, comprising:

(Component A) a resin that is a plastomer at 20°C and contains no ethylenically unsaturated group; and
(Component B) a crosslinking agent.

**2.** The resin composition for laser engraving according to Claim 1, wherein Component A is selected from the group consisting of a polycarbonate polyol, a polysiloxane polyol, an acrylic resin, a polyester resin having a hydroxy group at a molecular terminal, and a polyurethane resin having a hydroxy group at a molecular terminal, and Component B is selected from the group consisting of a (meth)acrylate compound, a polyfunctional isocyanate compound, and a silane coupling agent.

**3.** The resin composition for laser engraving according to Claim 1 or 2, wherein it comprises a polycarbonate polyol as Component A and a (meth)acrylate compound as Component B.

**4.** The resin composition for laser engraving according to Claim 1 or 2, wherein it comprises a polysiloxane polyol as Component A and a (meth)acrylate compound as Component B.

**5.** The resin composition for laser engraving according to Claim 1 or 2, wherein it comprises an acrylic resin as Component A and a (meth)acrylate compound as Component B.

**6.** The resin composition for laser engraving according to Claim 1 or 2, wherein it comprises a polyester resin having a hydroxy group at a molecular terminal as Component A and a (meth)acrylate compound as Component B.

**7.** The resin composition for laser engraving according to Claim 1 or 2, wherein it comprises a polyurethane resin having a hydroxy group at a molecular terminal as Component A and a (meth)acrylate compound as Component B.

**8.** The resin composition for laser engraving according to Claim 1 or 2, wherein it comprises an acrylic resin as Component A and a polyfunctional isocyanate compound as Component B.

**9.** The resin composition for laser engraving according to Claim 1 or 2, wherein it comprises a polyester resin having a hydroxy group at a molecular terminal as Component A and a polyfunctional isocyanate compound as Component B.

**10.** The resin composition for laser engraving according to Claim 1 or 2, wherein it comprises a polyurethane resin having a hydroxy group at a molecular terminal as Component A and a polyfunctional isocyanate compound as Component B.

**11.** The resin composition for laser engraving according to Claim 1 or 2, wherein it comprises a polysiloxane polyol as Component A and a silane coupling agent as Component B.

**12.** The resin composition for laser engraving according to Claim 1 or 2, wherein it comprises an acrylic resin as Component A and a silane coupling agent as Component B.

**13.** The resin composition for laser engraving according to Claim 1 or 2, wherein it comprises a polyester resin having a hydroxy group at a molecular terminal as Component A and a silane coupling agent as Component B.

**14.** The resin composition for laser engraving according to Claim 1 or 2, wherein it comprises a polyurethane resin having a hydroxy group at a molecular terminal as Component A and a silane coupling agent as Component B.

**15.** A relief printing plate precursor for laser engraving, comprising a relief-forming layer comprising the resin composition for laser engraving according to any one of Claims 1 to 14.

**16.** A relief printing plate precursor for laser engraving, comprising a crosslinked relief-forming layer formed by crosslinking by means of light and/or heat a relief-forming layer comprising the resin composition for laser engraving according to any one of Claims 1 to 14.

**17.** A process for producing a relief printing plate precursor for laser engraving, comprising:

a layer formation step of forming a relief-forming layer comprising the resin composition for laser engraving according to any one of Claims 1 to 14; and
a crosslinking step of crosslinking by means of light and/or heat the relief-forming layer to thus obtain a relief printing plate precursor having a crosslinked relief-forming layer.

**18.** The process for producing a relief printing plate precursor for laser engraving according to Claim 17, wherein the crosslinking step is a step of crosslinking by means of heat the layer of the resin composition for laser engraving to thus obtain a relief printing plate precursor having a relief-forming layer.

**19.** A process for making a relief printing plate, comprising:

a layer formation step of forming a relief-forming layer comprising the resin composition for laser engraving according to any one of Claims 1 to 14;
a crosslinking step of crosslinking the relief-forming layer by means of light and/or heat to thus obtain a relief printing plate precursor having a crosslinked relief-forming layer; and
an engraving step of laser-engraving the relief printing plate precursor having a crosslinked relief-forming layer to thus form a relief layer.

**20.** A relief printing plate having a relief layer made by the process for making a relief printing plate according to Claim 19.

**21.** The relief printing plate according to Claim 20, wherein the relief layer has a thickness of at least 0.05 mm but no greater than 10 mm.

**22.** The relief printing plate according to Claim 20 or 21, wherein the relief layer has a Shore A hardness of at least 50° but no greater than 90°.

**INTERNATIONAL SEARCH REPORT**

International application No.
PCT/JP2012/068956

A. CLASSIFICATION OF SUBJECT MATTER
*B41N1/12*(2006.01)i

According to International Patent Classification (IPC) or to both national classification and IPC

B. FIELDS SEARCHED

Minimum documentation searched (classification system followed by classification symbols)
B41N1/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2010-208326 A (Asahi Kasei E-materials Corp.), 24 September 2010 (24.09.2010), paragraphs [0073] to [0088] & US 2007/160928 A1 & EP 1710093 A1 & CN 1922545 A | 1-22 |
| A | WO 2006/030537 A1 (Asahi Kasei Chemicals Corp.), 23 March 2006 (23.03.2006), paragraphs [0065] to [0079] & US 2008/63979 A1 & EP 1801145 A1 & CN 101018819 A | 1-22 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 September, 2012 (13.09.12) | 25 September, 2012 (25.09.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2012/068956

C (Continuation). DOCUMENTS CONSIDERED TO BE RELEVANT

| Category* | Citation of document, with indication, where appropriate, of the relevant passages | Relevant to claim No. |
|---|---|---|
| A | JP 2006-1168 A (Toyobo Co., Ltd.),<br>05 January 2006 (05.01.2006),<br>paragraphs [0023], [0036] to [0038]<br>(Family: none) | 1-22 |
| A | JP 2004-314334 A (Asahi Kasei Chemicals Corp.),<br>11 November 2004 (11.11.2004),<br>paragraphs [0068] to [0078]<br>(Family: none) | 1-22 |
| A | WO 2003/022594 A1 (Asahi Kasei Corp.),<br>20 March 2003 (20.03.2003),<br>pages 58 to 67<br>& US 2004/157162 A1 & EP 1424210 A1<br>& CN 1522203 A | 1-22 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2846954 B
- JP 2004262136 A
- JP 2011510839 A
- JP 5029648 B
- JP 2011136455 A
- JP 2010208326 A
- JP 7239548 A
- JP 2008063554 A
- JP 2009178869 A
- JP 2009172658 A
- JP 2009 A
- JP 214334 A


### Non-patent literature cited in the description


- Senryo Binran. 1970
- Saishin Ganryo Binran. Color Index (C.I.) Handbook. 1977
- Saisin Ganryo Ouyogijutsu. CMC Publishing, 1986
- Insatsu Inki Gijutsu. CMC Publishing, 1984